# EUROPEAN PATENT APPLICATION

(11) **EP 3 815 758 A1**
(43) Date of publication of application: **05.05.2021**
(21) Application number: 19855970.0
(22) Date of filing: 22.08.2019
(51) Int. Cl.: A63C 17/01

(54) **SKATEBOARD DECK AND SKATEBOARD EQUIPPED WITH SAME**

(30) Priority: 27.08.2018 JP 2018158373
(71) Applicant: Hasegawa Corporation, Yachiyo-shi, Chiba 276-0022 (JP)
(72) Inventor: HASEGAWA Teiichi, Yachiyo-Shi, Chiba 276-0022 (JP)
(74) Representative: Mewburn Ellis LLP
(86) International application number: PCT/JP2019/032886
(87) International publication number: WO 2020/045240

(57) **Abstract**

[Problem] To provide a skateboard deck which allow front and rear wheels to stably come into contact with a road surface and the like having a three-dimensional shape with irregularities while ensuring usability and operability.

[Solution] A skateboard deck in which a plurality of board materials formed in thin board shapes are bonded together with an adhesive. The plurality of board materials include at least a first board material and a second board material, and also include a core material portion including the first board material and/or the second board material. A length of the first board material in a width direction orthogonal to a longitudinal direction of the deck at a central portion thereof in the longitudinal direction is shorterthan a length thereof in the width direction at both end portions of the deck in the longitudinal direction. A length of the second board material in the width direction at the central portion is substantially equivalent to a length thereof in the width direction at both end portions, and the length in the width direction at the central portion is longer than that of the first board material.

[Selected Figure] Fig. 4

## Description

### [Technical Field]

The present invention relates to a skateboard deck and a skateboard equipped with the same.

### [Background Art]

A skateboard is a road skateboard including a deck which has a shape in which both end portions of a flat board of which rectangular corner portions are rounded in arc shapes are further curved toward an upper surface side thereof, and a plurality of running wheels attached to a lower surface of the deck. A user runs on a road surface of a course by operating the skateboard with both feet on an upper surface of the deck. The user of the skateboard performs a skill performance by making full use of various techniques, especially in competitions. As a skill performance, for example, a user jumps to avoid obstacles provided on a course, jumps on stairs, slides on a handrail and the like, turns on a road, or bounces up and rubs a lower surface of a slanted deck against a road surface to brake.

PTL 1 discloses a flexible type (bendable type) skateboard in which a kick tail and a body are integrally molded. In the skateboard of PTL 1, a central portion of the body is sufficiently narrower than a two-feet support region. Moreover, the skateboard of PTL 1 has an upper surface that is flush with the two-feet support region without interruption. A user adds energy to rotation of two caster wheels by alternately twisting the body in first and second directions.

### [Citation List]

### [Patent Literature]

[PTL 1] Japanese Patent No. 5026612

### [Summary of Invention]

### [Technical Problem]

However, in the flexible type (bendable type) skateboard disclosed in PTL 1, since the central portion of the body has a narrowed shape, usability, operability and the like thereof are significantly different as compared with a conventional skateboard of which a central portion and both end portions have substantially the same width. On the other hand, in a conventional skateboard used in competitions and the like, since an overall length thereof is long, it easily bends at its center, and it has no problem with an uneven road surface having a two-dimensional shape, but since a central portion and both end portions thereof have substantially the same width, it is difficult to twist a body thereof at the center. For that reason, since two wheels provided at both end portions of an axle thereof cannot move independently on a twisted road surface, on a road surface having a three-dimensional shape with irregularities, etc., one wheel may rise up from the road surface in some cases, which makes it difficult to perform accurate riding by bringing the four front and rear wheels into stable contact with the road surface.

The present invention has been made to solve the above problems, and an object thereof is to provide a skateboard deck and a skateboard equipped with the same which allow front and rear wheels to stably come into contact with a road surface and the like having a three-dimensional shape with irregularities while ensuring usability and operability.

### [Solution to Problem]

According to the present invention, the above problems are solved by a skateboard deck in which a plurality of board materials formed in thin board shapes are bonded together with an adhesive, in which the plurality of board materials include at least a first board material and a second board material and also include a core material portion including the first board material and/or the second board material, a length of the first board material in a width direction orthogonal to a longitudinal direction thereof at a central portion of the deck in the longitudinal direction is shorter than a length thereof in the width direction at both end portions of the deck in the longitudinal direction, and a length of the second board material in the width direction at the central portion is substantially equivalent to a length thereof in the width direction at both end portions and the length in the width direction at the central portion is longer than that of the first board material.

According to the skateboard deck having the present configuration, the length of the first board material in the width direction at the central portion of the deck in the longitudinal direction (a certain region on the central portion side of the deck in the longitudinal direction) is formed shorter than the length in the width direction at both end portions of the deck in the longitudinal direction (a certain region on both end portion sides of the deck in the longitudinal direction), and thus the region of the central portion has a narrowed shape as a whole. Further, the length in the width direction at the central portion in the longitudinal direction of the deck is shorter in the first board material than in the second board material. For that reason, torsional rigidity of the deck at the central portion in the longitudinal direction is lower than that in a case in which the length of the first board material in the width direction is equivalent to that of the second board material. Thus, even in a case in which wheels would rise up in a conventional art when traveling on a road surface and the like having a three-dimensional shape with irregularities, the central portion is easily twisted although the central portion of the deck and both end portions appear to have substantially the same width. As a result, an amount of twisting can be controlled and rising up of the wheels can be inhibited, whereby front and rear wheels can be stably brought into contact with the road surface and the like, and thus board operations in accordance with intentions of a competitor can be realized.

According to the skateboard deck having the present configuration, the second board material has a length in the width direction at the central portion substantially equivalent to the length in the width direction at both end portions, has a uniform-width shape as a whole, and is bonded to a plurality of board materials including the first board material. The first board material and the second board material are in a state in which they overlap each other at the central portion in the longitudinal direction. For that reason, the skateboard deck has an appearance equivalent to a conventional skateboard having substantially the same width at the central portion and both end portions, and can ensure the same usability and operability as before.

Further, in a case in which one of the first board material and the second board material is made of wood, weight reduction is realized as compared to a case in which the first board material and the second board material are formed of heavy materials such as fiber reinforced plastics having the same thickness. In this way, according to the skateboard deck having the present configuration, it is possible to allow the front and rear wheels to stably come into contact with a road surface and the like having a three-dimensional shape with irregularities while ensuring usability and operability by forming the external appearance and the like to be equivalent to before.

The skateboard deck having the above configuration is preferably characterized in that the length of the first board material in the width direction at the central portion is set to be in a range of at least 20% and at most 70% of the length of the second board material in the width direction at the central portion, and a length of the portion in the longitudinal direction, in which the length of the first board material in the width direction is shorter than the length of the second board material in the width direction, is set to be at least 20% and at most 70% of the length of the first board material in the longitudinal direction.

According to the skateboard deck having the present configuration, the length in the width direction and the length in the longitudinal direction at the central portion (sizes of a narrowed portion at the central portion of the deck) of the first board material are set to be within such a range, and thus, as compared to the case in which the lengths of the first board material in the width direction and the longitudinal direction at the central portion are equivalent to those of the second board material (in a case in which the central portion of the deck has a uniform-width shape), it becomes possible to accurately adjust the torsional rigidity of the deck at the central portion in the longitudinal direction, and it is possible to provide a skateboard deck that is easy to twist in accordance with personal preference in addition to being easy to bend in the longitudinal direction of the deck.

The skateboard deck having the above configuration is preferably characterized in that the first board material and the second board material are at least formed of wood having at least a grain direction in the longitudinal direction or the width direction or a fiber reinforced plastic having at least a fiber direction in the longitudinal direction or the width direction.

The skateboard deck having the present configuration may be formed of a plurality of board materials formed in thin board shapes, and materials having directional strength are preferably used therefor although any material can be used for the board materials. When the board materials are materials having directional strength, it is easy to design and distribute the strength of a skateboard deck that requires multi-directional board operations by combining the materials in the required directions. Further, they are also required to be lightweight in terms of board operations. Taking this into consideration, at least by adopting lightweight wood having at least a grain direction in the longitudinal direction or the width direction, or a thin board-shaped fiber reinforced plastic with high strength characteristics that has at least a fiber direction in the longitudinal direction or the width direction, it is possible to provide a skateboard deck that is lightweight, has a high load bearing capacity, and has excellent operability.

Also, according to the skateboard deck having the present configuration, in a case in which the first board material and the second board material are formed of wood, weight reduction can be realized, and in a case in which the first board material and the second board material are formed of a fiber reinforced plastic, high strength can be realized. Further, in a case in which the first board material and the second board material are formed of a combination of wood and a fiber reinforced plastic, both weight reduction and high strength can be achieved at the same time.

In the skateboard deck having the above configuration, the plurality of board materials preferably include at least a core material portion which is disposed substantially at a center in a thickness direction thereof and includes the first board material formed of wood and/or the second board material formed of wood and a reinforcing portion which is adhered to at least one of an upper surface of the core material portion and a lower surface of the core material portion and includes the first board material formed of a fiber reinforced plastic board having a thin board shape and/or the second board material formed of a fiber reinforced plastic board.

According to the skateboard deck having the present configuration, the core material portion is disposed at the central portion in the thickness direction, and the reinforcing portion is adhered to at least one of the upper surface and the lower surface of the core material portion in the thickness direction. Since the first board material and/or the second board material included in the core material is made of wood, weight reduction is realized as compared with a case in which the core material portion is formed of a fiber reinforced plastic board. In addition, since the reinforcing portion formed of the fiber reinforced plastic board is formed at a position separated from a central axis (the core material portion), bending moment increases and a load bearing capacity of the deck can be efficiently increased.

The skateboard deck having the above configuration is preferably characterized in that a pair of the second board materials are disposed above and below the first board material, a filler that is filled outside the central portion of the first board material and in a region sandwiched between the pair of second board materials is provided, and the filler is filled to a position that substantially coincides with outer edges of the pair of second board materials.

According to the skateboard deck having the present configuration, since the filler is provided in the region sandwiched between the outer side of the central portion of the first board material and the upper and lower second board materials (a region outside the narrowed portion of the first board material at the central portion of the deck), and the filler is filled to the position that substantially coincides with the outer edges of the pair of second board materials, the first board material is reliably positioned at a desired position by using the outer edges of the second board materials as a reference. As a result, it is possible to prevent strength characteristics of the deck from being biased due to improper positioning of the first board material. Further, when the second board material is a transparent material, the filler can be visually recognized, and thus it can be easily recognized whether or not the deck has a reduced torsional rigidity.

The skateboard deck having the above configuration is preferably characterized in that the pair of second board materials are disposed on the upper side and the lower side of the first board material, the second board material disposed on the lower side of the first board material forms a back surface of the deck and is bonded to the lower surface of the first board material with an adhesive, and the pair of second board materials are bonded with an adhesive in a region of the central portion of the deck in which the first board material is not disposed.

According to the skateboard deck having the present configuration, the second board material disposed on the lower side of the first board material forms the back surface of the deck, the second board material is formed on the lower surface of the first board material with an adhesive, and the pair of second board materials are bonded with an adhesive in the region in which the first board material is not disposed (the region outside the narrowed portion at the central portion of the deck). For that reason, the user visually recognizes a stepped portion (a portion to which the pair of second board materials are bonded) formed on the second board materials from the back surface of the deck, and thus it can be easily recognized whether or not the deck has a reduced torsional rigidity.

The skateboard deck having the above configuration is preferably characterized in that an outer edge of a board material that is formed of a fiber reinforced plastic among the plurality of board materials is positioned inward at least from the outer edge of the second board material formed of wood on the entire circumference of the board material.

According to the skateboard deck having the present configuration, the outer edge of the board material formed of a fiber reinforced plastic is disposed inward from the outer edge of the second board material formed of wood. For that reason, it is possible to prevent reinforcing fibers exposed from the outer edge of the fiber reinforced plastic from being exposed as sharp spines and injuring human bodies.

The skateboard deck having the above configuration is preferably characterized in that a board material that is formed of a fiber reinforced plastic among the plurality of board materials includes a filler that is disposed in an outer frame shape to surround the entire circumference thereof and fills a space sandwiched by any of the board materials formed of wood, and the filler is filled at least to a position that substantially coincides with the outer edge of the second board material made of wood.

According to the skateboard deck having the present configuration, the filler is disposed in an outer frame shape to surround the entire circumference of any of the board materials formed of a fiber reinforced plastic, and is filled to the position that substantially coincides with the outer edge of the second board material. For that reason, by using the outer edge of the second board material as a reference, the board material formed of a fiber reinforced plastic is reliably positioned at a desired position. As a result, it is possible to prevent strength characteristics of the deck from being biased due to improper positioning of the board material formed of a fiber reinforced plastic. Further, the filler formed in an outer frame shape can reliably prevent reinforcing fibers from being exposed from the outer edge of the fiber reinforced plastic.

The skateboard deck having the above configuration is preferably characterized in that at least a pair of board materials included in the plurality of board materials and disposed adjacent to each other are bonded with an adhesive with a non-woven fabric interposed therebetween.

According to the skateboard deck having the present configuration, since the adhesive for bonding at least the pair of board materials disposed adjacent to each other is held between them, and an amount of the held adhesive at respective location is made uniform due to the interposition of the non-woven fabric, the adhesive can be reliably held even at a bending molding site, and the adhesion performance is improved.

According to the present invention, the above problems are solved by a skateboard which includes the skateboard deck described in any of the above, and wheels attached to the back surface of the deck.

According to the skateboard having the present configuration, it is possible to provide a skateboard which allows front and rear wheels to stably come into contact with a road surface and the like having a three-dimensional shape with irregularities while ensuring usability and operability.

### [Advantageous Effects of Invention]

According to the present invention, it is possible to provide a skateboard deck and a skateboard equipped with the same which allow front and rear wheels to stably come into contact with a road surface and the like having a three-dimensional shape with irregularities while ensuring usability and operability.

### [Brief Description of the Drawings]

[Fig. 1]

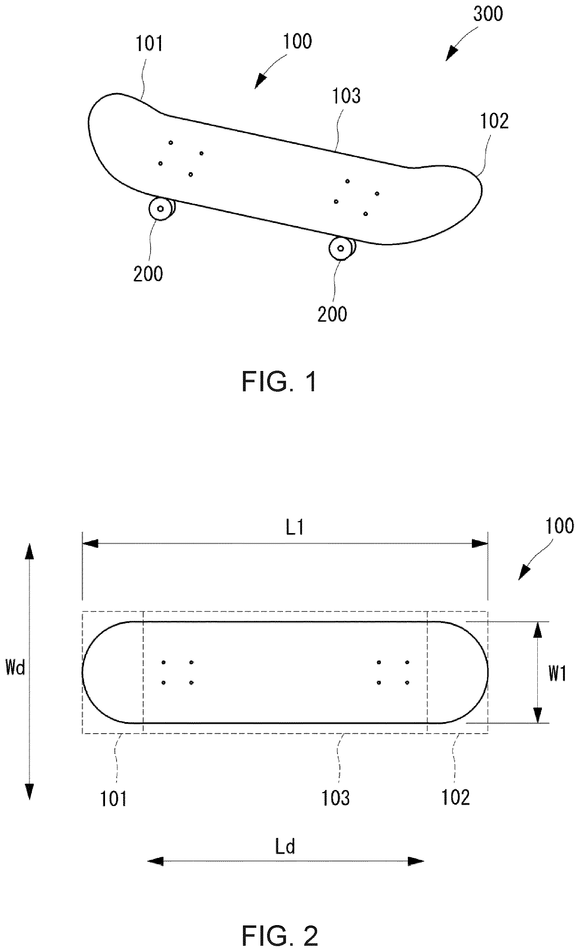

   Fig. 1 is a perspective view showing a skateboard according to a first embodiment of the present invention.
[Fig. 2]
   Fig. 2 is a plan view showing a skateboard deck in Fig. 1.
[Fig. 3]

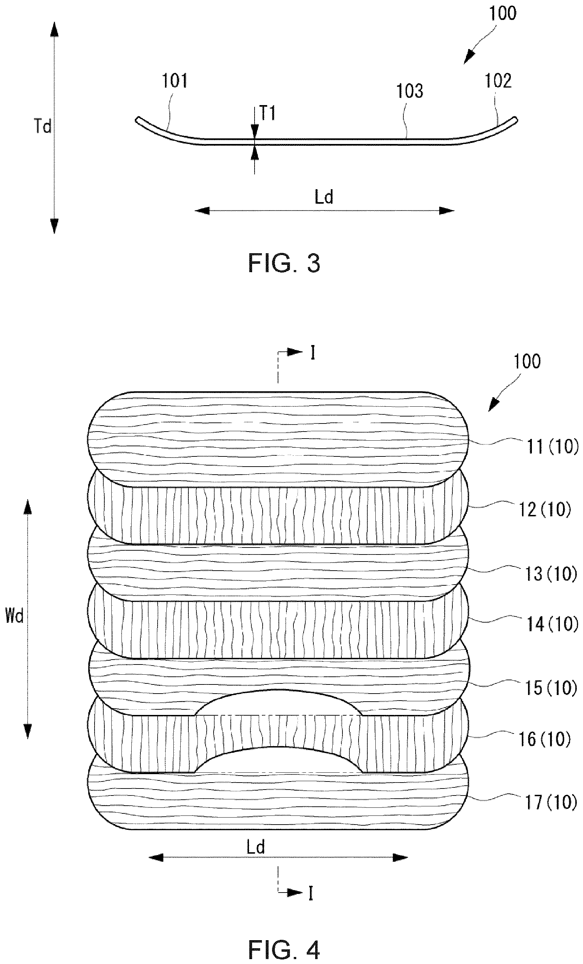

   Fig. 3 is a front view showing the skateboard deck in Fig. 1.
[Fig. 4]
   Fig. 4 is an exploded perspective view showing a state before the skateboard deck in Fig. 1 is bonded.
[Fig. 5]

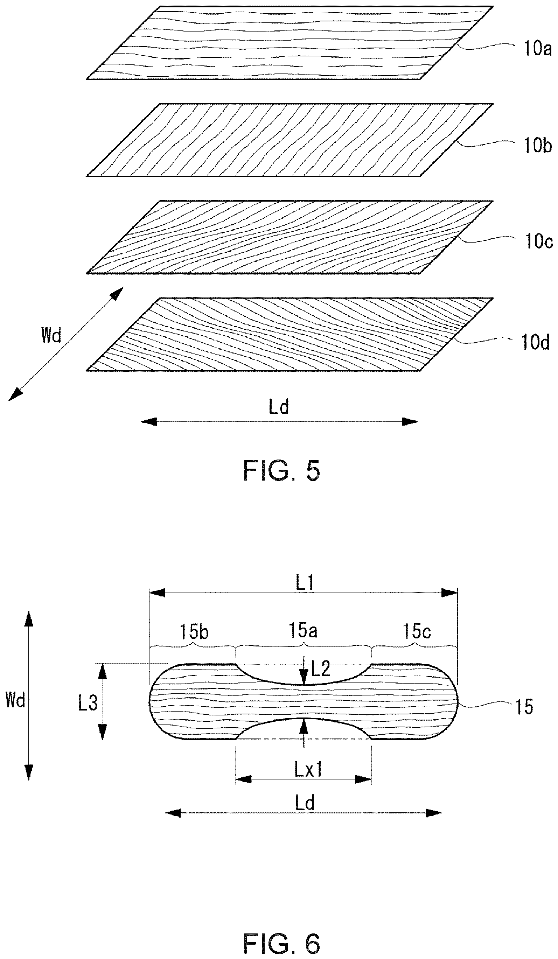

   Fig. 5 is a perspective view showing a grain direction of a wooden board.
[Fig. 6]
   Fig. 6 is a plan view of the wooden board shown in Fig. 4.
[Fig. 7]

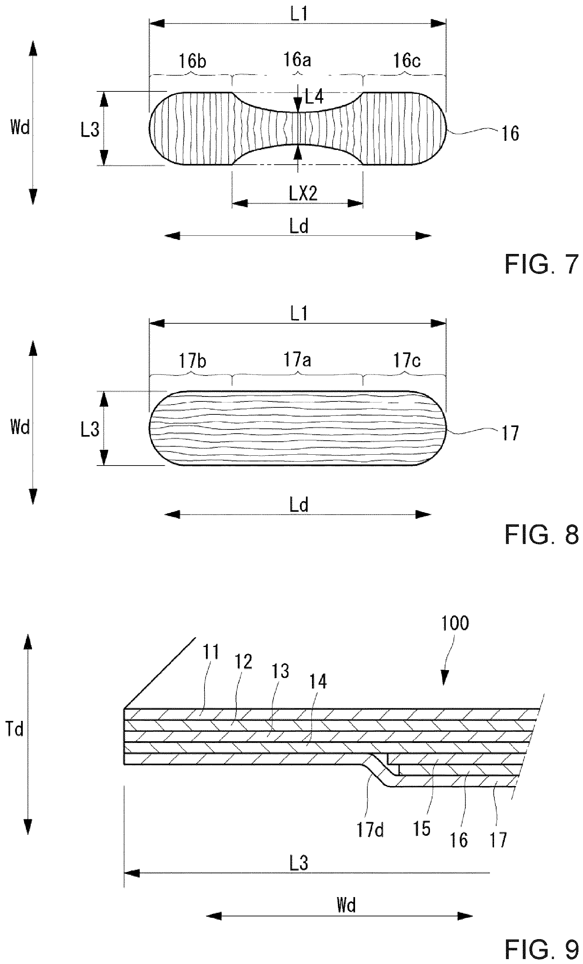

   Fig. 7 is a plan view of the wooden board shown in Fig. 4.
[Fig. 8]
   Fig. 8 is a plan view of the wooden board shown in Fig. 4.
[Fig. 9]
   Fig. 9 is a cross-sectional view along line I-I showing a state in which the skateboard deck in Fig. 4 has been bonded.
[Figs. 10A and 10B]

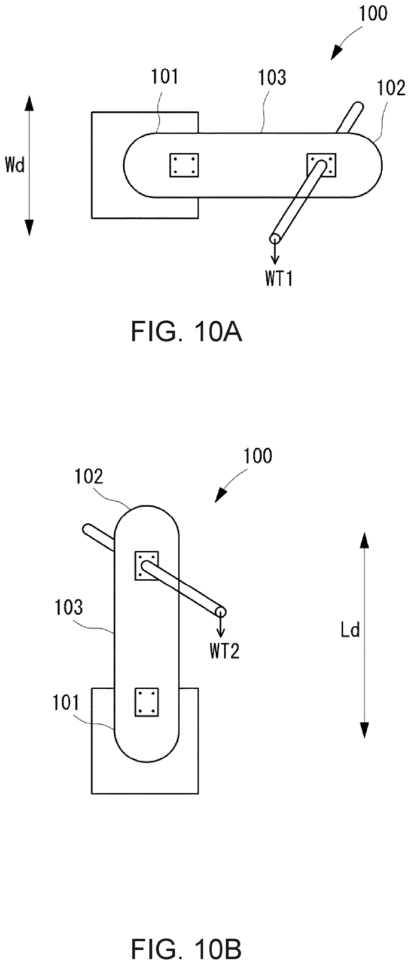

   Figs. 10A and 10B are a perspective views illustrating a test method for torsional rigidity and bending rigidity.
[Fig. 11]

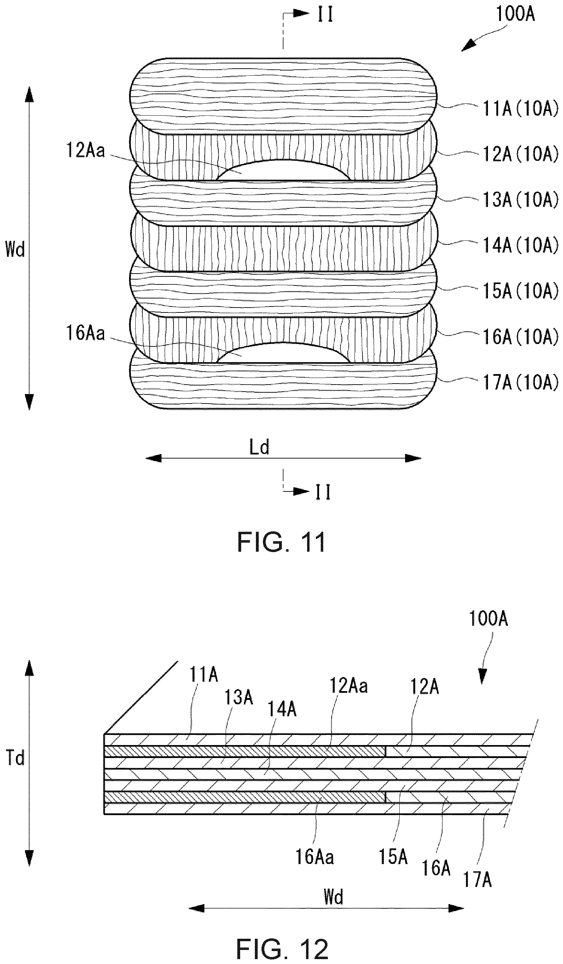

   Fig. 11 is an exploded perspective view showing a state before a skateboard deck according to a second embodiment is bonded.
[Fig. 12]
   Fig. 12 is a cross-sectional view along line II-II showing a state in which the skateboard deck in Fig. 11 has been bonded.
[Fig. 13]

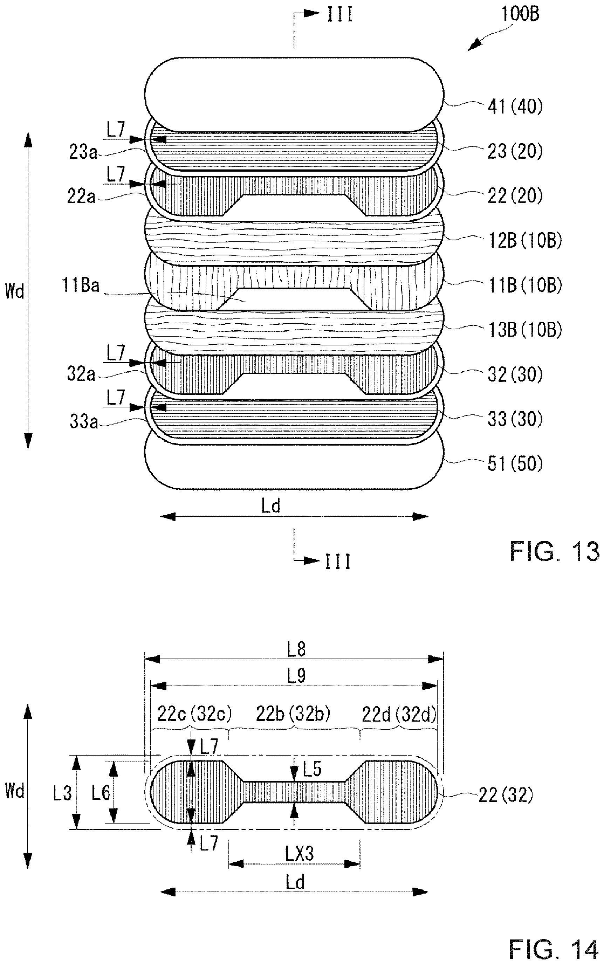

   Fig. 13 is an exploded perspective view showing a state before a skateboard deck according to a third embodiment is bonded.
[Fig. 14]
   Fig. 14 is a plan view of a fiber reinforced plastic board shown in Fig. 13.
[Fig. 15]

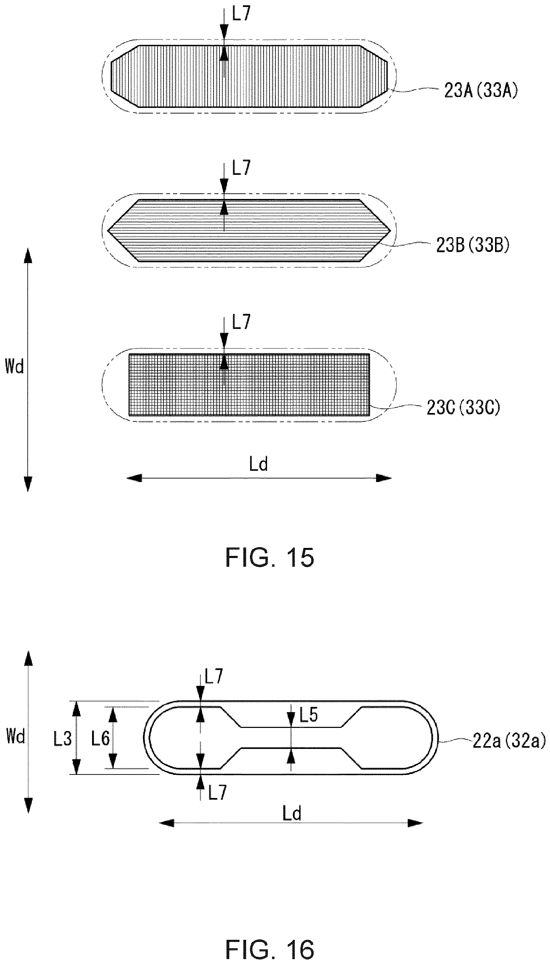

   Fig. 15 is a plan view showing a shape of an outer edge of the fiber reinforced plastic board.
[Fig. 16]
   Fig. 16 is a plan view showing a filler according to the third embodiment.
[Fig. 17]

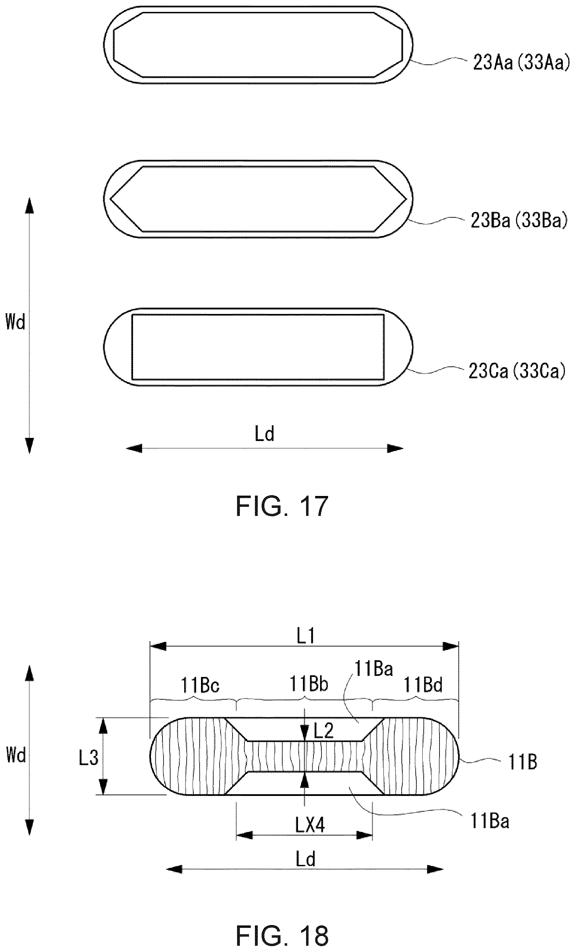

   Fig. 17 is a plan view showing a modified example of the filler according to the third embodiment.
[Fig. 18]
   Fig. 18 is a plan view of a wooden board shown in Fig. 13.
[Fig. 19]

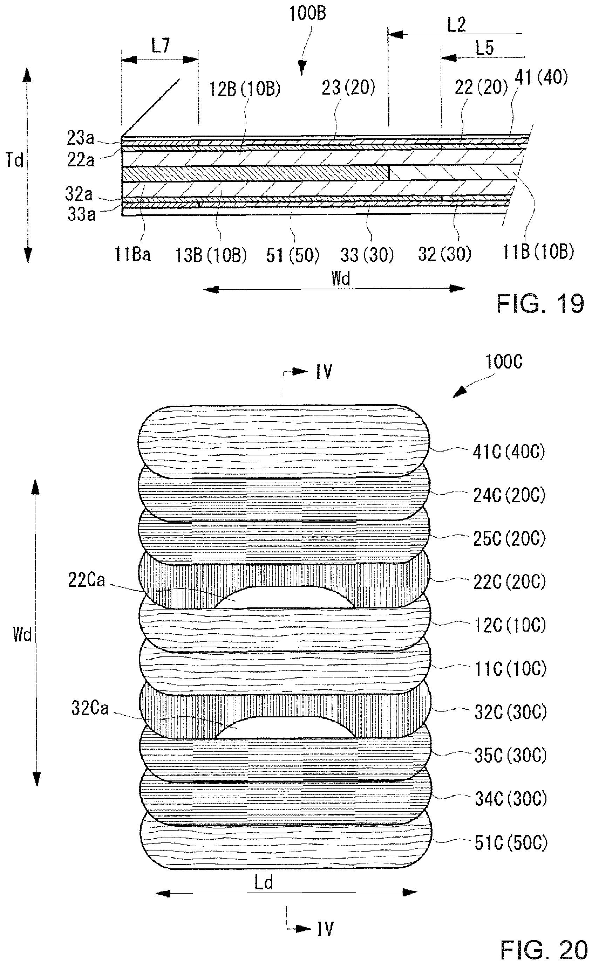

   Fig. 19 is a cross-sectional view along line III-III showing a state in which the skateboard deck in Fig. 13 has been bonded.
[Fig. 20]
   Fig. 20 is an exploded perspective view showing a state before a skateboard deck according to a fourth embodiment is bonded.
[Fig. 21]

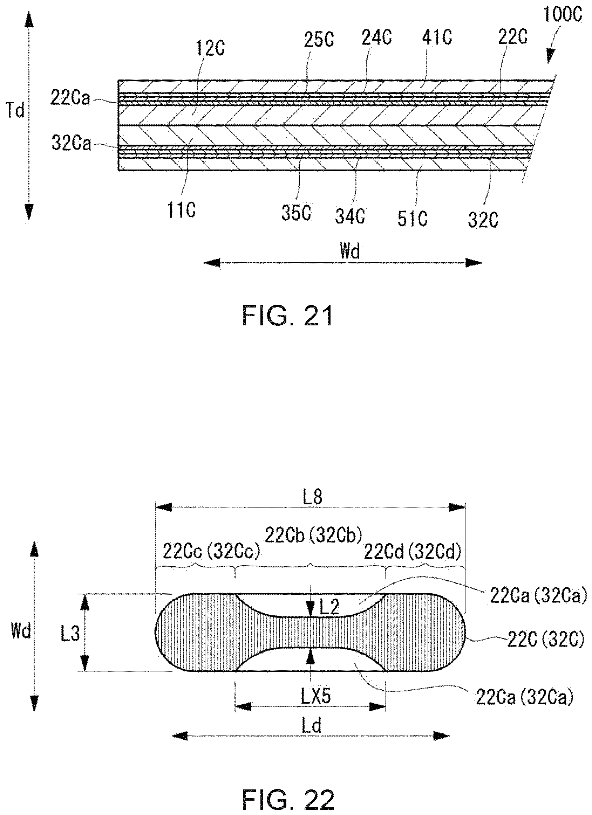

   Fig. 21 is a cross-sectional view along line IV-IV showing a state in which the skateboard deck in Fig. 20 has been bonded.
[Fig. 22]
   Fig. 22 is a plan view of a fiber reinforced plastic board shown in Fig. 20.
[Fig. 23]

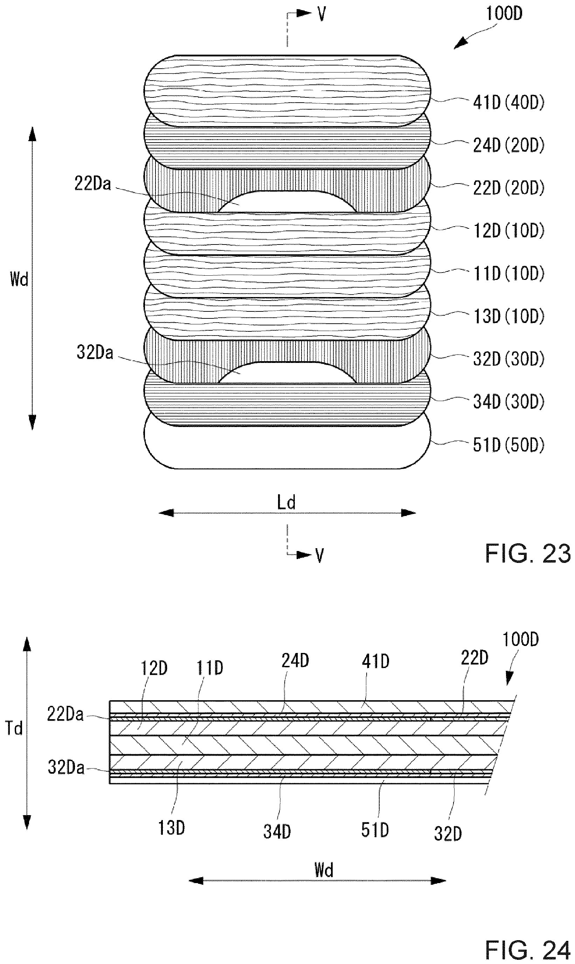

   Fig. 23 is an exploded perspective view showing a state before a skateboard deck according to a fifth embodiment is bonded.
[Fig. 24]
   Fig. 24 is a cross-sectional view along line V-V showing a state in which the skateboard in Fig. 23 has been bonded.

### [Description of Embodiments]

Hereinafter, preferred embodiments of the present invention will be described in detail with reference to the figures. Also, although the embodiments described below are provided with various technically preferable limitations because they are appropriate specific examples of the present invention, the scope of the present invention is not limited to these aspects unless the present invention is otherwise specifically stated as being limited in the following description. Further, in each figure, the same components will be denoted by the same reference numerals, and detailed description thereof will be omitted as appropriate.

### [First embodiment]

Hereinafter, a skateboard 300 according to a first embodiment of the present invention will be described with reference to the figures. Fig. 1 is a perspective view showing the skateboard 300 according to the present embodiment. Fig. 2 is a plan view showing a deck 100 for the skateboard 300 shown in Fig. 1. Fig. 3 is a front view showing the deck 100 for the skateboard 300 shown in Fig. 1.

As shown in Fig. 1, the skateboard 300 includes the deck 100 on which a user rests both feet, and a pair of wheels 200 attached to a back surface of the deck 100. Each wheel 200 is configured of two wheels that are rotatably fixed to both ends of one axle.

The deck 100 is configured of a nose portion 101 disposed at an end portion thereof in a longitudinal direction Ld, a tail portion 102 disposed at an end portion thereof in the longitudinal Ld, and a main body portion 103 disposed at a central portion thereof in the longitudinal direction Ld. When the user uses the skateboard 300, the nose portion 101 is on a front side in a traveling direction and the tail portion 102 is on a rear side in the traveling direction.

As shown in Fig. 2, the nose portion 101 and the tail portion 102 are each formed in a semicircular shape when viewed in a plan view. As shown in Fig. 3, when viewed from the front, the nose portion 101 and the tail portion 102 have shapes that gently warp upward toward the end portions in the longitudinal direction Ld with respect to a horizontal plane on which the main body portion 103 is disposed. Four through holes for inserting fasteners (not shown) to secure the wheels 200 are provided respectively at a portion at which the nose portion 101 and the main body portion 103 are connected to each other and at a portion at which the tail portion 102 and the main body portion 103 are connected to each other.

As shown in Fig. 2, a length of the deck 100 in the longitudinal direction Ld is L1, and a length of the deck 100 in a width direction Wd orthogonal to the longitudinal direction Ld is W1. As shown in Fig. 3, a length of the deck 100 in a thickness direction Td thereof is T1. For example, T1 is 5 to 15 mm, W1 is 150 to 250 mm, and L1 is 700 to 900 mm.

### Next, the deck 100 shown in Fig. 1 will be described in detail.

The deck 100 for the skateboard 300 according to the present embodiment is configured of a plurality of board materials formed in thin board shapes. Examples of materials of the board materials include wood, plastic, a foamed body made of plastic, a resin impregnated body of paper or non-woven fabric, a lightweight metal such as aluminum and titanium, and a combination of these materials. The deck 100 of the present embodiment is a board-shaped laminated structure formed by bonding a plurality of wooden boards having thin board shapes with an adhesive. Fig. 4 is an exploded perspective view showing a state before the deck 100 for the skateboard 300 in Fig. 1 is bonded.

As shown in Fig. 4, the deck 100 of the present embodiment is a laminated structure configured of a core material portion 10 in which a wooden board 11, a wooden board 12, a wooden board 13, a wooden board 14, a wooden board 15, a wooden board 16, and a wooden board 17 are laminated in order from an upper side toward a lower side in the thickness direction Td. The wooden boards 11 to 17 are disposed such that grain directions of the wooden boards disposed adjacent to each other in the thickness direction Td are different from each other. A board thickness of each of the wooden boards 11 to 17 in the thickness direction Td is preferably set to be in a range of at least 0.5 mm and at most 6 mm, and for example, the board thickness in the thickness direction Td is 1.4 mm. For the wooden boards 11 to 17, rotary wood such as maple, poplar, paulownia, and Pterocarya rhoifolia can be used.

In Fig. 4, lines shown on surfaces of the wooden boards 11 to 17 indicate the grain of wood. The wooden board 11, the wooden board 13, the wooden board 15, and the wooden board 17 are maple material having a board thickness of 1.8 mm, and the grain direction is in the longitudinal direction Ld of the deck 100. The wooden boards 12, 14 and 16 are maple material having a board thickness of 1.0 mm, and the grain direction is in the width direction Wd of the deck 100. As the wooden boards 11 to 17 constituting the core material portion 10, at least one of a wooden board 10a whose grain direction shown in Fig. 5 is in the longitudinal direction Ld of the deck 100, a wooden board 10b whose grain direction is in the width direction Wd of the deck 100, a wooden board 10c whose grain direction is inclined diagonally 45 degrees rightward with respect to the longitudinal direction Ld and the width direction Wd of the deck 100, and a wooden board 10d whose grain direction is inclined diagonally 45 degrees leftward with respect to the longitudinal direction Ld and the width direction Wd of the deck 100 can be adopted.

The wooden boards 11 to 17 may be configured by combining the wooden boards 10a, 10b, 10c, and 10d shown in Fig. 5, or may be configured of only one of the wooden boards 10a, 10b, 10c, and 10d. In addition, the wooden boards 11 to 17 may be configured by arbitrarily combining the wooden boards 10a, 10b, 10c, and 10d. By using such wooden boards 10a, 10b, 10c, and 10d in the grain direction in which the directionality is specified, it is possible to increase a degree of freedom in deck design relating to strength and characteristics of the deck 100 in the longitudinal direction Ld, the width direction Wd, and the oblique direction.

For example, in the case of increasing a strength of the deck 100 in the longitudinal direction Ld, this purpose can be achieved by increasing the number of wooden boards 10a used in which the grain of wood is oriented in the longitudinal direction Ld or by increasing a thickness thereof. In the case of increasing the strength of the deck 100 in the width direction Wd, this purpose can be achieved by increasing the number of used wooden boards 10b in which the grain of wood is oriented in the width direction Wd or by increasing the thickness thereof. Further, since the wooden boards 10c and 10d in which the grain of wood is diagonally oriented contribute to torsional rigidity of the deck 100, the core material portion 10 having a strength suitable for this purpose can be formed by selecting thicknesses, the number of constituent boards, combinations, and the like of these wooden boards.

The core material portion 10 of the deck 100 of the present embodiment has a structure in which the deck 100 can be easily twisted at the center in the longitudinal direction Ld in order to bring the front and rear wheels into stable contact with a road surface and the like having a three-dimensional shape with irregularities. Specifically, among the seven wooden boards 11 to 17 constituting the core material portion 10, the fifth wooden board 15 and the sixth wooden board 16 from above in the thickness direction Td have shapes in which lengths thereof in the width direction Wd at the central portion of the deck 100 in the longitudinal direction Ld are made shorter than those of the other wooden boards 11 to 14 and 17.

As shown in Fig. 4, the wooden board 14 (second board material) in which the grain of wood is in the width direction Wd is disposed in the thickness direction Td above the wooden board 15 (first board material) in which the grain of wood is in the longitudinal direction Ld and the wooden board 16 (first board material) in which the grain of wood is in the width direction Wd. Further, the wooden board 17 (second wooden board) in which the grain of wood is in the longitudinal direction Ld is disposed below the wooden boards 15 and 16 in the thickness direction Td. The wooden board 17 forms the back surface of the deck 100 and is bonded to a lower surface of the wooden board 16 with an adhesive.

Here, shapes of the wooden board 15 and the wooden board 16 will be described with reference to Figs. 6 and 7. Fig. 6 is a plan view of the wooden board 15 shown in Fig. 4. As shown in Fig. 6, a length L2 of the wooden board 15 in the width direction Wd at a central portion 15a of the deck 100 in the longitudinal direction Ld is shorter than a length L3 thereof in the width direction Wd at end portions 15b and 15c of the deck 100 in the longitudinal direction Ld. The length L2 is preferably set to be in a range of at least 20% and at most 70% of the length L3. More preferably, the length L2 is set to be in a range of at least 30% and at most 60% of the length L3. Here, the length L2 indicates the minimum length in the width direction Wd at the central portion 15a (a certain region on the central portion side of the deck 100). Also, the length L3 indicates the maximum length in the width direction Wd at the end portions 15b and 15c (certain regions on both end portion sides of the deck 100). Further, Fig. 6 shows an example in which the length L2 of the wooden board 15 is set to be 44% of the length L3. Here, in a case in which the length L2 is less than 20% of the length L3, a width of the central portion 15a may be too narrow and a bending strength thereof in the longitudinal direction Ld may be insufficient. In addition, in a case in which the length L2 exceeds 70% of the length L3, the width of the central portion 15a may be too wide to sufficiently reduce the torsional rigidity.

In the wooden board 15, the central portion 15a has a shape in which a length thereof in the width direction Wd gradually increases in an arc shape from a center position of the central portion 15a in the longitudinal direction Ld toward the end portion 15b. Also, the central portion 15a has a shape in which a length thereof in the width direction Wd gradually increases in an arc shape from the center position of the central portion 15a in the longitudinal direction Ld toward the end portion 15c. The central portion 15a is a portion in which the length L2 of the wooden board 15 in the width direction Wd is shorter than the length L3 of the wooden board 14 in the width direction Wd. A length Lx1 of the central portion 15a in the longitudinal direction Ld is preferably set to be, for example, in a range of at least 20% and at most 70% of the length L1 of the deck 100 in the longitudinal direction Ld. More preferably, the length Lx1 is in a range of at least 30% and at most 60% of the length L1. Here, in a case in which the length Lx1 is less than 20% of the length L1, a narrowed portion of the central portion 15a may be too short to effectively reduce the torsional rigidity in the vicinity of the central portion of the deck 100. In addition, in a case in which the length Lx1 exceeds 70% of the length L1, the narrowed portion of the central portion 15a may be too long, and the action of intensively reducing the rigidity in the vicinity of the central portion of the deck 100 may be insufficient.

The length L2 and the length Lx1 can be set to be arbitrary values within the above-mentioned range. In a case in which the length L2 of the wooden board 15 in the width direction Wd is 20% of the length L3 and the length Lx1 in the longitudinal direction Ld is 70% of the length L1, the torsional rigidity of the central portion 15a of the wooden board 15 is the lowest. In a case in which the length L2 of the wooden board 15 is 70% of the length L3 and the length Lx1 is 20% of the length L1, the torsional rigidity of the central portion 15a of the wooden board 15 is the highest. Here, in Fig. 6, for example, the length Lx1 of the wooden board 15 is set to 44% of the length L1.

As shown in Fig. 7, similar to the wooden board 15 described above with respect to Fig. 6, a length L4 of the wooden board 16 in the width direction Wd at a central portion 16a of the deck 100 in the longitudinal direction Ld is shorter than a length L3 thereof in the width direction Wd at end portions 16b and 16c of the deck 100 in the longitudinal direction Ld. The length L4 is preferably set to be in a range of at least 20% and at most 70% of the length L3. More preferably, the length L4 is in a range of at least 30% and at most 60% of the length L3. Here, the length L3 indicates the maximum length in the width direction Wd at the end portions 16b and 16c (certain regions on both end portion sides of the deck 100). Also, the length L4 indicates the minimum length in the width direction Wd at the central portion 16a (a certain region on the central portion side of the deck 100). The length L4 is slightly shorter than the length L2.

In the wooden board 16, the central portion 16a has a shape in which a length thereof in the width direction Wd gradually increases in an arc shape from a center position of the central portion 16a in the longitudinal direction Ld toward the end portion 16b. The central portion 16a has a shape in which a length thereof in the width direction Wd gradually increases in an arc shape from the center position of the central portion 16a in the longitudinal direction Ld toward the end portion 16c. The central portion 16a is a portion in which the length L4 of the wooden board 16 in the width direction Wd is shorter than the length L3 of the wooden board 14 in the width direction Wd. A length Lx2 of the central portion 16a in the longitudinal direction Ld is preferably set to be, for example, in a range of at least 20% and at most 70% of the length L1 of the deck 100 in the longitudinal direction Ld. More preferably, the length Lx2 is in a range of at least 30% and at most 60% of the length L1. This is equivalent to the wooden board 15 described above with respect to Fig. 6.

The length L4 and the length Lx2 can be set to be arbitrary values within the above-mentioned range. In a case in which the length L4 of the wooden board 16 in the width direction Wd is 20% of the length L3 and the length Lx2 in the longitudinal direction Ld is 70% of the length L1, the torsional rigidity of the central portion 16a of the wooden board 16 is the lowest. In a case in which the length L4 of the wooden board 16 is 70% of the length L3 and the length Lx2 is 20% of the length L1, the torsional rigidity of the central portion 16a of the wooden board 16 is the highest. Further, although the length Lx1 of the wooden board 15 and the length Lx2 of the wooden board 16 may be set to be substantially the same length, they may be different lengths.

Next, with reference to Fig. 8, shapes of the wooden board 11, the wooden board 12, the wooden board 13, the wooden board 14, and the wooden board 17 will be described. Although the wooden board 17 will be described with reference to Fig. 8, the shapes of the wooden board 11, the wooden board 12, the wooden board 13, and the wooden board 14 are the same, and thus description thereof will be omitted in the following description.

As shown in Fig. 8, a length of the wooden board 17 in the width direction Wd at a central portion 17a thereof is the same width as or substantially equivalent to the length L3 in the width direction Wd at end portions 17b and 17c thereof. The minimum length of the wooden board 17 in the width direction Wd at the central portion 17a (a certain region on the central portion side of the deck 100) is longer than the lengths L2 and L4 in the width direction at the central portions 15a and 16a of the wooden boards 15 and 16. Here, the length L3 indicates the maximum length in the width direction Wd at the end portions 17b and 17c (certain regions on both end portion sides of the deck 100).

Fig. 9 is a cross-sectional view along line I-I showing a state in which the skateboard deck 100 in Fig. 4 has been bonded. As shown in Fig. 9, the wooden board 17 forms the back surface of the deck 100 and is bonded to the lower surface of the wooden board 16 with an adhesive. The wooden board 14 and the wooden board 17 are bonded with an adhesive in the region of the central portions 15a and 16a of the deck 100 in which the wooden boards 15 and 16 are not disposed (the region of the central portions 15a and 16a separated by the two-dot chain line). For that reason, a stepped portion 17d that the user can see from the back surface of the deck 100 is formed on the wooden board 17.

The length L4 in the width direction Wd at the central portion 16a of the wooden board 16 is slightly shorter than the length L2 in the width direction Wd at the central portion 15a of the wooden board 15. For that reason, as shown in Fig. 9, an end portion in the width direction Wd at the central portion 15a of the wooden board 15 is disposed outside an end portion in the width direction Wd at the central portion 16a of the wooden board 16, and thus a stepped shape is formed. The stepped portion 17d of the wooden board 17 is supported by the stepped shape, and an inclination angle of the stepped portion 17d becomes a gentle inclination angle (for example, 40 degrees to 50 degrees). A space between the end portions of the wooden board 15 and the wooden board 16 in the width direction Wd and the stepped portion 17d is in a state in which an adhesive is filled.

In the deck 100 of the present embodiment, with respect to shapes of the fifth wooden board 15 and the sixth wooden board 16 from above in the thickness direction Td among the seven wooden boards 11 to 17 constituting the core material portion 10, the lengths thereof in the width direction Wd at the central portion in the longitudinal direction Ld of the deck 100 are made shorter than those of other wooden boards 11 to 14 and 17, but other aspects may be adopted. For example, in order to achieve a desired torsional rigidity, any number of other wooden boards except the wooden boards 11 and 17 may be shaped such that the length in the width direction Wd at the central portion of the deck 100 in the longitudinal direction Ld is made shorter than that in the wooden boards 11 and 17.

Operations and effects of the deck 100 for the skateboard 300 of the present embodiment described above will be described.

According to the deck 100 for the skateboard 300 of the present embodiment, with respect to the wooden board 14 (second board material) and the wooden board 17 (second board material), the length in the width direction Wd at the central portion is longer than that in the wooden boards 15 and 16 (first board material). That is, the lengths of the wooden boards 15 and 16 in the width direction Wd at the central portions 15a and 16a in the longitudinal direction Ld of the deck 100 are shorter than those of the wooden boards 14 and 17. For that reason, the torsional rigidity at the central portion of the deck 100 in the longitudinal direction Ld decreases as compared with a case in which the lengths L2 and L4 of the wooden boards 15 and 16 in the width direction Wd are equivalent to those of the wooden boards 14 and 17.

As a result, when traveling on a road surface and the like having a three-dimensional shape with irregularities while ensuring the same usability and operability as before, even in a case in which the wheels would rise up in a conventional art and the central portion and both end portions of the deck are formed in shapes having substantially the same width, an amount of twist thereof can be controlled by making the central portion easier to twist, and rising up of the wheels can be inhibited, whereby the front and rear wheels 200 can be stably brought into contact with the road surface and the like, and thus board operations in accordance with the intention of a competitor can be realized.

According to the deck 100 forthe skateboard 300 of the present embodiment, the wooden board 17 forms the back surface of the deck 100, the wooden board 17 is bonded to the lower surface of the wooden board 16 with an adhesive, and the wooden board 17 is bonded to the wooden board 14 with an adhesive in the region in which the wooden boards 15 and 16 are not disposed. For that reason, the user visually recognizes the stepped portion 17d formed on the wooden board 17 from the back surface of the deck 100 (the portion of the wooden board 17 which is bonded to the wooden board 14) so that can easily recognize whether or not the deck 100 has a reduced torsional rigidity.

Here, torsional rigidity and bending rigidity of the deck 100 of the present embodiment and a conventional deck (not shown) were measured and compared. The conventional deck is configured by replacing the wooden boards 15 and 16 in Fig. 4 with the wooden boards 13 and 14 (the wooden boards 15 and 16 are configured to have the same width), and types and configurations of other wooden boards are equivalent to described above. Further, with respect to external dimensions, both the deck 100 and the conventional deck have a thickness T1 of 10.6 mm, a width W1 of 197 mm, and a length L1 of 810 mm.

As shown in Figs. 10A and 10B, in the test method, four through holes for attaching the wheels 200 provided on each of the left and right sides in Fig. 2 are used, and the four through holes on one side (on the nose portion 101 side) are used to fix the deck 100 to a rigid body. Next, two iron pipes are attached and fixed to central portions between the four holes on both the front side (wooden board 11 side) and the back side (wooden board 17 side) of the deck 100 using the four through holes on the other side (on the tail portion 102 side) to be perpendicular to a board surface of deck 100 from all directions. The iron pipes are iron pipes having an outer diameter of 21 mm, an inner diameter of 16 mm, a length of 500 mm, and a weight of 0.85 kg. Since the two iron pipes are attached to the front side and the back side of the deck 100 in a balanced manner like a weeble with two arms, weights of the iron pipes can be ignored in measurement.

In measuring the torsional rigidity, as in the front view as shown in Fig. 10A, the deck 100 was turned sideways and the nose portion 101 side was fixed such that surfaces of the deck 100 in the width direction Wd are vertically oriented, and a weight WT1 was attached to a position of the iron pipe extending from a front surface side of the deck 100 in a forward direction 500 mm away from the front surface. The deck 100 was twisted counterclockwise when viewed from the tail portion 102 side due to a gravitational action of the weight WT1, and at this time, an amount of displacement of a tip of the iron pipe when the weight WT1 was displaced downward was measured.

In measuring the bending rigidity, the tail portion 102 was rotated 90 degrees upward from the front view of Fig. 10A, as shown in Fig. 10B, the nose portion 101 side was fixed such that surfaces of the deck 100 in the longitudinal direction Ld are vertically oriented, a weight WT2 was attached to the iron pipe which is attached to the tail portion 102 side and extends from the front surface side in the forward direction, the main body of the deck 100 was bent toward the front surface side due to a gravitational action of the weight WT2, and an amount of displacement of the tip of the iron pipe when the weight WT2 was displaced downward was measured. Each displacement was measured using a circular dial gauge with 0.01 mm scale.

Measurement results of the amount of displacement and the weight are as follows.
Torsional rigidity (WT1 = 1 kg)
Amount of displacement of deck 100: 12.50 mm
Amount of displacement of conventional deck: 9.85 mm
Bending rigidity (WT2 = 2 kg)
Amount of displacement of deck 100: 6.90 mm
Amount of displacement of conventional deck: 6.80 mm
Weight of deck
Weight of deck 100: 1113 g
Weight of conventional deck: 1165 g

Each rigidity increases as the amount of displacement measured by the above test method decreases. Therefore, it can be confirmed that, as compared to the conventional deck, the deck 100 of the present embodiment has a clearly reduced torsional rigidity and is lightweight, regardless of substantially the same bending rigidity in the longitudinal direction Ld.

### [Second embodiment]

Hereinafter, a skateboard deck 100A according to a second embodiment of the present invention will be described with reference to the figures. The present embodiment is a modified example of the first embodiment and is equivalent to the first embodiment except for the cases described below, and thus the description thereof will be omitted below.

The deck 100 of the first embodiment has the shape in which the fifth wooden board 15 and the sixth wooden board 16 from above in the thickness direction Td among the seven wooden boards 11 to 17 constituting the core material portion 10 are formed such that the lengths thereof in the width direction Wd at the central portion of the deck 100 in the longitudinal direction Ld are made shorter than those of the other wooden boards 11 to 14 and 17. In contrast thereto, the deck 100A of the present embodiment has a shape in which a second wooden board 12A and a sixth wooden board 16A from above in the thickness direction Td among seven wooden boards 11A to 17A constituting a core material portion 10A are formed such that lengths thereof in the width direction Wd at the central portion of the deck 100A in the longitudinal direction Ld are made shorter than those of the other wooden boards 11A, 13A, 14A, 15A, and 17A.

### Next, the deck 100A of the present embodiment will be described in detail.

The deck 100A of the present embodiment is a board-shaped laminated structure formed by bonding a plurality of wooden boards having thin board shapes with an adhesive. Fig. 11 is an exploded perspective view showing a state before the deck 100A is bonded. Fig. 12 is a cross-sectional view along line II-II showing a state in which the skateboard deck in Fig. 11 has been bonded.

As shown in Fig. 11, the deck 100A of the present embodiment is a laminated structure configured of the core material portion 10A in which the wooden board 11A, the wooden board 12A, the wooden board 13A, the wooden board 14A, the wooden board 15A, the wooden board 16A, and the wooden board 17A are laminated in order from an upper side toward a lower side thereof in the thickness direction Td. The wooden boards 11A to 17A are disposed such that grain directions of the wooden boards disposed adjacent to each other in the thickness direction Td are different from each other. A board thickness of each of the wooden boards 11A to 17A in the thickness direction Td is desirably set to be in a range of at least 0.5 mm and at most 6 mm, and for example, the board thickness in the thickness direction Td is 1.4 mm. For the wooden boards 11A to 17A, rotary wood such as maple, poplar, paulownia, and Pterocarya rhoifolia can be used.

In order to bring the front and rear wheels into stable contact with a road surface and the like having a three-dimensional shape with irregularities, the core material portion 10A of the deck 100A of the present embodiment has a structure in which the deck 100A can be easily twisted at a center thereof in the longitudinal direction Ld. Specifically, the second wooden board 12A and the sixth wooden board 16A from above in the thickness direction Td among the seven wooden boards 11A to 17A constituting the core material portion 10A have a shape in which the lengths thereof in the width direction Wd at the central portion of the deck 100A in the longitudinal direction Ld are made shorter than those of the other wooden boards 11A, 13A, 14A, 15A, and 17A.

As shown in Fig. 11, the wooden board 11A (second board material) is disposed above the wooden board 12A (first board material) in the thickness direction Td. The wooden board 13A (second board material) is disposed below the wooden board 12A in the thickness direction Td. The wooden board 13A is bonded to a lower surface of the wooden board 12A with an adhesive. The wooden board 15A (second board material) is disposed above the wooden board 16A (first board material) in the thickness direction Td. The wooden board 17A (second board material) is disposed below the wooden board 16A in the thickness direction Td. The wooden board 17A forms a back surface of the deck 100A and is bonded to a lower surface of the wooden board 16A with an adhesive.

Shapes of the wooden boards 12A and 16A are equivalent to the shape of the wooden board 15 of the first embodiment. Shapes of the wooden boards 11A, 13A, 14A, 15A, and 17A are equivalent to the shape of the wooden board 17 of the first embodiment. For that reason, the description of the shapes of the wooden boards 11A to 17A will be omitted.

As shown in Figs. 11 and 12, a pair of crescent-shaped fillers 12Aa are disposed at a central portion of the wooden board 12A in the longitudinal direction Ld to sandwich a portion having a length of L2 in the width direction Wd. A pair of crescent-shaped fillers 16Aa are disposed at a central portion of the wooden board 16A in the longitudinal direction Ld to sandwich a portion having a length L2 in the width direction Wd.

As the fillers 12Aa and 16Aa, for example, resin sheets such as ABS, polyethylene(PE), and polypropylene(PP) and foamed resin sheets thereof are preferable, and they are also preferable in terms of design because they can be colored. In addition, as the fillers 12Aa and 16Aa, wood, paper material, non-woven fabric material, resin-impregnated sheet thereof, and the like can be adopted. The fillers 12Aa and 16Aa made of these sheet materials preferably have substantially the same thicknesses as those of the wooden boards 12A and 16A. As a result, pressure bonding between the wooden boards can be made uniform and appropriate bonding can be performed.

As shown in Fig. 12, the filler 12Aa fills a region sandwiched between the wooden board 11A and the wooden board 13A and is filled from an outer edge of the wooden board 12A to a position that substantially coincides with an outer edge of the wooden board 11A. The filler 16Aa fills a region sandwiched between the wooden board 15A and the wooden board 17A and is filled from an outer edge of the wooden board 16A to a position that substantially coincides with an outer edge of the wooden board 17A.

In the present embodiment described above, the lengths of the wooden boards 12A and 16A in the width direction Wd at the central portion of the deck 100A in the longitudinal direction Ld are shorter than those of the wooden boards 11A, 13A, 14A, 15A and 17A. For that reason, torsional rigidity at the central portion of the deck 100A in the longitudinal direction Ld decreases as compared with a case in which the lengths L2 of the wooden boards 12A and 16A in the width direction Wd are equivalent to those of the other wooden boards. As a result, the front and rear wheels 200 can be stably brought into contact with a road surface and the like having a three-dimensional shape with irregularities while ensuring usability and operability.

### [Third embodiment]

Hereinafter, a skateboard deck 100B according to a third embodiment of the present invention will be described with reference to the figures. The present embodiment is a modified example of the first embodiment and is equivalent to the first embodiment except for the cases described below, and thus the description thereof will be omitted below.

In the first embodiment, the deck 100 is configured of only the core material portion 10 including the wooden boards 11 to 17. In contrast thereto, in the present embodiment, the deck 100B is configured of a core material portion 10B including wooden boards, a front surface reinforcing portion 20, a back surface reinforcing portion 30, a front surface portion 40, and a back surface portion 50.

As shown in Fig. 13, the deck 100B of the present embodiment includes the core material portion 10B disposed substantially at a center thereof in the thickness direction Td, the front surface reinforcing portion 20 adhered to an upper surface of the core material portion 10B in the thickness direction Td, the back surface reinforcing portion 30 adhered to a lower surface of the core material portion 10B in the thickness direction Td, the surface portion 40 adhered to an upper surface of the front surface reinforcing portion 20 in the thickness direction Td, and the back surface portion 50 adhered to a lower surface of the back surface reinforcing portion 30 in the thickness direction Td.

As shown in Fig. 13, the core material portion 10B has a thin board-shaped wooden board 11B (first board material) disposed at the central portion thereof in the thickness direction Td, a thin board-shaped wooden board 12B (second board material) pressed and bonded to an upper surface of the wooden board 11B in the thickness direction Td with an adhesive, and a thin board-shaped wooden board 13B (second board material) pressed and bonded to a lower surface of the wooden board 11B in the thickness direction Td with an adhesive. A board thickness of each of the wooden boards 11B, 12B, and 13B in the thickness direction Td is preferably set to be in a range of at least 0.5 mm and at most 6 mm, and for example, the board thickness in the thickness direction Td is 1.4 mm. For the wooden boards 11B, 12B, 13B, rotary wood such as maple, poplar, paulownia, and Pterocarya rhoifolia can be used.

Since the core material portion 10B is configured of the wooden boards 11B, 12B, 13B, there are limits to a load bearing capacity that leads to breakage, a rebound resilient force that enables quick operation, and a decrease in strength (sinking) due to long-term use, etc. For that reason, in the present embodiment, fiber reinforced plastic (FRP) boards are disposed on the upper surface and the lower surface of the core material portion 10B including the wooden boards 11B, 12B, and 13B, thereby effectively solving problems in physical properties caused only by the wooden boards 11B, 12B, and 13B.

The front surface reinforcing portion 20 is configured of a thin board-shaped fiber reinforced plastic board 22 (first board material) adhered to an upper surface of the wooden board 12B and a thin board-shaped fiber reinforced plastic board 23 (second board material) adhered to a lower surface of a front surface board 41 (the surface portion 40). The back surface reinforcing portion 30 is configured of a thin board-shaped fiber reinforced plastic board 32 (first board material) adhered to a lower surface of the wooden board 13B and a thin board-shaped fiber reinforced plastic board 33 (second board material) adhered to an upper surface of a back surface board 51 (the back surface portion 50).

In Fig. 13, lines shown on front surfaces of the fiber reinforced plastic boards 22, 23, 32, and 33 indicate fiber directions of reinforcing fibers. In the fiber reinforced plastic boards 22 and 32, as shown in Fig. 13, reinforcing fibers are unidirectionally arranged with the fiber direction oriented in the width direction Wd of the deck 100B. Similarly, in the fiber reinforced plastic boards 23 and 33, reinforcing fibers are unidirectionally arranged with the fiber direction oriented in the longitudinal direction Ld of the deck 100B.

The fiber reinforced plastic boards 22, 23, 32, and 33 are not limited to the examples shown in Fig. 13, and ones whose fiber direction is in the longitudinal direction Ld of the deck 100B, ones whose fiber direction is in the width direction Wd of the deck 100B, and ones whose fiber direction is in both the longitudinal direction Ld and the width direction Wd of the deck 100B can be appropriately adopted.

Since the deck 100B has a substantially rectangular shape as a whole in which the length in the longitudinal direction Ld is several times longer than the length in the width direction Wd, it is indispensable to independently maintain its strength in the longitudinal direction Ld from the perspective of kinetic characteristics of the deck 100B. For that reason, the fiber directions of the fiber reinforced plastic boards 22 and 32 (first board material) having narrowed central portions in the longitudinal direction Ld are more preferably oriented in the width direction Wd of the deck 100B. As a result, in order to realize a lightweight deck 100B, it is possible to efficiently reduce torsional rigidity of the deck 100B without reducing breakage strength in the longitudinal direction Ld as much as possible. Further, regarding such fiber directions, the same applies to the fiber directions of the wooden boards 11B, 12B, and 13B constituting the core material portion 10B.

As the reinforcing fibers used for the fiber reinforced plastic boards 22, 23, 32, and 33, for example, glass fibers, carbon fibers, aramid fibers, and the like can be adopted, and various reinforcing fibers can be adopted regardless of whether they are inorganic materials or organic materials. As a matrix resin impregnated with the reinforcing fibers, a thermosetting resin such as an epoxy resin or a polyester resin, or a thermoplastic resin such as an ABS resin or a polypropylene (PP) resin can be adopted.

Here, in the deck 100B in which a thickness and a weight thereof are limited, in order to obtain an efficient reinforcing effect by using a small amount of reinforcing fibers and the matrix resin, it is preferable to adopt inorganic fibers such as glass fibers having low elongation characteristics as the reinforcing fibers and thermosetting resins such as epoxy resins having relatively high hardness after curing as the matrix resin. Further, the fiber reinforced plastic boards 22, 23, 32, and 33 are preferably FRP cured boards that have been heat-cured in advance to regulate the thickness.

This is because, for example, in a semi-cured (a so-called prepreg-shaped) FRP sheet, it is necessary to heat-cure the deck 100B at the same time as heat-bond molding, and thus, due to the flow of the resin resulting from pressurization during molding, a thickness of the FRP board may not be uniform, and physical property values of strength as designed for the deck 100B may not be obtained. From such a viewpoint, since physical properties of strength are uniform in the FRP cured board in which the reinforcing fibers are aligned in one direction and pre-cured by heating, strength characteristics corresponding to the thickness can be obtained by changing only the thickness and adopting it, and thus a strength design of the deck 100B can be easily and surely performed. For such fiber reinforced plastic boards 22, 23, 32, and 33, each board thickness in the thickness direction Td is preferably set to be in a range of at least 0.1 mm and at most 1 mm. The thicknesses, fiber directions, and the number of constituents of the fiber reinforced plastic boards in accordance with strength characteristics required by the configuration of the core material portion 10B may be appropriately selected and adopted.

The fiber reinforced plastic boards 22, 23, 32, and 33 preferably have a volume content of the reinforcing fibers of 40% or more and 60% or less. By setting the volume content of the reinforcing fibers to 40% or more and 60% or less, the adhesion between the reinforcing fibers and the matrix resin is improved, so that characteristics of the reinforcing fibers can be maintained with good durability.

In the fiber reinforced plastic boards 22, 23, 32, and 33, the resin is in close contact with the reinforcing fibers, and thus when an outer edge of the deck 100B is worn, the reinforcing fibers are exposed as sharp spines, which may injure human bodies. As a countermeasure for that, a protective cover that covers an outer peripheral portion of the deck may be attached as a separate member, but it cannot be easily adopted because it leads to problems such as weight increase and falling off caused by an impact. In the present embodiment, the risk of the reinforcing fibers sticking to a hand and causing injury is prevented without attaching a separate member such as a protective cover.

As shown in Fig. 13, in the present embodiment, outer edges of the fiber reinforced plastic boards 22 and 23 are positioned inward by a length L7 from an outer edge of the wooden board 12B and an outer edge of the front surface board 41 on the entire circumferences of the fiber reinforced plastic boards 22 and 23. Similarly, in the present embodiment, outer edges of the fiber reinforced plastic boards 32 and 33 are positioned inward by the length L7 from an outer edges of the wooden board 13B and an outer edge of the back surface board 51 on the entire circumferences of the fiber reinforced plastic boards 32 and 33. The length L7 is 5 mm or more and 30 mm or less, preferably 10 mm or more and 20 mm or less.

Fig. 14 is a plan view of the fiber reinforced plastic boards 22 and 32 shown in Fig. 13. In Fig. 14, a two-dot chain line disposed outside the outer edge of the fiber reinforced plastic board 22 indicates the outer edge of the wooden board 12B and the outer edge of the front surface board 41. Similarly, the two-dot chain line disposed outside the outer edge of the fiber reinforced plastic board 32 indicates the outer edge of the wooden board 13B and the outer edge of the back surface board 51.

As shown in Fig. 14, a length L5 of the fiber reinforced plastic board 22 (first board material) in the width direction Wd at a central portion 22b of the deck 100B in the longitudinal direction Ld is shorter than a length L3 of the wooden board 12B (second board material) in the width direction Wd at an end portion 22c and an end portion 22d of the deck 100B in the longitudinal direction Ld. Lengths L6 of the fiber reinforced plastic board 22 shown in Fig. 14 at the end portions 22c and 22d in the longitudinal direction Ld are shorter than the length L3 in the width direction Wd at both end portions of the wooden board 12B in the longitudinal direction Ld.

As shown in Fig. 14, the length L3 in the width direction Wd is the sum of the length L6 and twice the length L7. Further, a length L9 of the fiber reinforced plastic board 22 in the longitudinal direction Ld is shorter than a length L8 of the wooden board 12B in the longitudinal direction. Similarly, the length L8 is the sum of the length L9 and twice the length L7.

Similarly, the length L5 of the fiber reinforced plastic board 32 (first board material) in the width direction Wd at a central portion 32b of the deck 100B in the longitudinal direction Ld is shorter than the length L3 of the wooden board 13B (second board member) in the width direction Wd at an end portion 32c and an end portion 32d of the deck 100B in the longitudinal direction Ld. The length L9 of the fiber reinforced plastic board 32 in the longitudinal direction Ld is shorter than the length L8 of the wooden board 13B in the longitudinal direction. The length L5 of the fiber reinforced plastic boards 22 and 32 is preferably set to be in a range of at least 20% and at most 70% of the length L3. More preferably, the length L5 is in a range of at least 30% and at most 60% of the length L3. In a case in which the length L3 is 200 mm, the length L5 is set to be in a range of at least 40 mm and at most 140 mm. Here, in a case in which the length L5 is less than 20% of the length L3 in the fiber reinforced plastic board 22 (32), the width of the central portion 22b (32b) may be too narrow and the bending strength in the longitudinal direction Ld may be insufficient. Further, in a case in which the length L5 exceeds 70% of the length L3, the width of the central portion 22b (32b) may be too wide to sufficiently reduce the torsional rigidity.

In the fiber reinforced plastic board 22 (32), the central portion 22b (32b) has a shape in which the length in the width direction Wd gradually increases linearly from a region having the same width at a center position of the central portion 22b (32b) in the longitudinal direction Ld toward the end portion 22c (32c). Further, the central portion 22b (32b) has a shape in which the length in the width direction Wd gradually increases linearly from the region having the same width at the center position of the central portion 22b (32b) in the longitudinal direction Ld toward the end portion 22d (32d). The central portion 22b (32b) is a portion in which the length L5 of the fiber reinforced plastic board 22 (32) in the width direction Wd is shorter than the length L3 of the wooden board 12B (13B) in the width direction Wd at the end portion 22c (32c) and the end portion 22d (32d).

Further, a length Lx3 of the central portion 22b (32b) in the longitudinal direction Ld is preferably set to be, for example, in a range of at least 20% and at most 70% of the length L8 of the deck 100 in the longitudinal direction Ld. More preferably, the length Lx3 is in a range of at least 30% and at most 60% of the length L8. The length L5 and the length Lx3 can be set to arbitrary values within the above-mentioned range. In a case in which the length L5 of the fiber reinforced plastic board 22 (32) is 20% of the length L3 and the length Lx3 is 70% of the length L8, the torsional rigidity of the central portion 22b (32b) of the fiber reinforced plastic board 22 (32) is the lowest. In a case in which the length L5 of the fiber reinforced plastic board 22 (32) is 70% of the length L3 and the length Lx3 is 20% of the length L8, the torsional rigidity of the central portion 22b (32b) of the fiber reinforced plastic board 22 (32) is the highest. Here, in a case in which the length Lx3 in the longitudinal direction Ld is less than 20% of the length L8 in the fiber reinforced plastic board 22 (32), the narrowed portion of the central portion 22b (32b) may be too small to effectively reduce the torsional rigidity in the vicinity of the central portion of the deck 100B. Further, in a case in which the length Lx3 exceeds 70% of the length L1, the narrowed portion may be too wide and the action of intensively reducing the rigidity in the vicinity of the central portion of the deck 100B may be insufficient.

The fiber reinforced plastic board 22 (32) shown in Fig. 14 has a fiber direction in the width direction Wd, but other embodiments may be used. For example, the fiber reinforced plastic board 22 (32) may have a fiber direction in the longitudinal direction Ld or a fiber direction in both the longitudinal direction Ld and the width direction Wd.

As shapes of the outer edges of both end portions of the fiber reinforced plastic board 23 (33), the shapes shown in Fig. 15 may be adopted instead of the semicircular shape as shown in Fig. 14. For example, as in a fiber reinforced plastic board 23A (33A) in Fig. 15, both end portions in the longitudinal direction Ld may be trapezoidal.

Further, as in a fiber reinforced plastic board 23B (33B) in Fig. 15, both end portions in the longitudinal direction Ld may be triangular. Also, as in a fiber reinforced plastic board 23C (33C) in Fig. 15, both end portions in the longitudinal direction Ld may be rectangular. Here, although the shapes of the outer edges of the fiber reinforced plastic boards 23 and 33 have been described, shapes of outer edges of both end portions the fiber reinforced plastic boards 22 and 32 may also be trapezoidal, triangular, or rectangular.

In Fig. 15, a two-dot chain line disposed outside an outer edge of the fiber reinforced plastic board 23A (33A) indicates the outer edge of the wooden board 12B (wooden board 13B) and the outer edge of the front surface board 41 (back surface board 51). Similarly, a two-dot chain line disposed outside an outer edge of the fiber reinforced plastic board 23B (33B) indicates the outer edge of the wooden board 12B (wooden board 13B) and the outer edge of the front surface board 41 (back surface board 51). Similarly, a two-dot chain line disposed outside an outer edge of the fiber reinforced plastic board 23C (33C) indicates the outer edge of the wooden board 12B (wooden board 13B) and the outer edge of the front surface board 41 (back surface board 51).

In all of the fiber reinforced plastic board 23A (33A), the fiber reinforced plastic board 23B (33B), and the fiber reinforced plastic board 23C (33C) shown in Fig. 15, the outer edge of the central portion in the longitudinal direction Ld is disposed inward by the length L7 from the outer edge of the wooden board and the front surface board (back surface board) disposed adjacent to each other.

On the other hand, in all of the fiber reinforced plastic board 23A (33A), the fiber reinforced plastic board 23B (33B), and the fiber reinforced plastic board 23C (33C), the outer edges of both end portions in the longitudinal direction Ld are disposed inward to be separated by a distance longer than the length L7 from the outer edges of the wooden board and the front surface board (back surface board) disposed adjacent to each other. Since both end portions in the longitudinal direction Ld are portions deviated from the central portion in the longitudinal direction Ld, which is a main strength region, they may have a shape such as a trapezoid, a triangle, or a quadrangle that can be easily molded.

The fiber reinforced plastic board 23A (33A) shown in Fig. 15 has the fiber direction in one direction of the width direction Wd, but it may be one whose fiber direction is in the longitudinal direction Ld, or one whose fiber direction is in both the width direction Wd and the longitudinal direction Ld. The fiber reinforced plastic board 23B (33B) shown in Fig. 15 has the fiber direction in one direction of the longitudinal direction Ld, but it may be one whose fiber direction is in the width direction Wd, or one whose fiber direction is in both the width direction Wd and the longitudinal direction Ld.

The fiber reinforced plastic board 23C (board 33C) shown in Fig. 15 has fiber directions in both the width direction Wd and the longitudinal direction Ld, but they may be ones whose fiber directions are in the width direction Wd or ones whose fiber directions are in the longitudinal direction Ld. Further, such examples whose fiber directions are in both the width direction Wd and the longitudinal direction Ld include, for example, fiber reinforced plastic boards made of woven fabric with reinforcing fibers arranged in vertical and horizontal directions, fiber reinforced plastic boards formed by forming a vertically unidirectional fiber reinforced plastic board and a horizontally unidirectional fiber reinforced plastic board in two upper and lower layers, etc.

As shown in Fig. 13, a filler 22a is disposed around the fiber reinforced plastic board 22 to be disposed in an outer frame shape to surround the entire circumference thereof. A filler 23a is disposed around the fiber reinforced plastic board 23 to be disposed in an outer frame shape to surround the entire circumference thereof. A filler 32a is disposed around the fiber reinforced plastic board 32 to be disposed in an outer frame shape to surround the entire circumference thereof. A filler 33a is disposed around the fiber reinforced plastic board 33 to be disposed in an outer frame shape to surround the entire circumference thereof.

As shown in Fig. 16, the filler 22a (32a) has the same inner peripheral surface as that of an outer contour of the fiber reinforced plastic board 22 (32). As the fillers 22a, 23a, 32a, and 33a, the same materials as those of the fillers 12Aa and 16Aa of the second embodiment can be adopted. For example, when the fillers 22a, 23a, 32a, and 33a are foamed resin sheets, because they are lightweight and can also be colored, they are preferable in designing external appearance of side surfaces. These filling sheet materials preferably have approximately the same thicknesses as the fiber reinforced plastic boards.

In a case in which the fiber reinforced plastic boards 22 and 32 are configured to be adjacent to the front surface portion 40 and the back surface portion 50, respectively, the thickness of the filler 22a (32a) may be thicker or thinner than the thicknesses of the fiber reinforced plastic boards. In this case, an outer peripheral portion of the front surface portion 40 and/or the back surface portion 50 is deformed, so that a convex or concave design can be added to the outer circumference of the front surface or the back surface. Further, the fillers 22a, 23a, 32a, and 33a may be integrally formed in a continuous state in an outer frame shape, or may be divided into a plurality of pieces and formed in an outer frame shape.

Fig. 17 is a plan view showing a modified example of the filler according to the third embodiment. In a case in which the fiber reinforced plastic board 23A (33A) having both end portions formed in trapezoidal shapes shown in Fig. 15 is used as the fiber reinforced plastic board 23 (33), a filler 23Aa (33Aa) shown in Fig. 17 is used. The filler 23Aa (33Aa) is a filler formed by making an outer peripheral shape thereof coincide with the wooden board 12B and the front surface board 41 (the wooden board 13B and the back surface board 51), and an inner peripheral shape thereof coincide with the fiber reinforced plastic board 23A (33A).

In a case in which the fiber reinforced plastic board 23B (33B) having both end portions in triangular shapes shown in Fig. 15 is used as the fiber reinforced plastic board 23(33), a filler 23Ba (33Ba) shown in Fig. 17 is used. The filler 23Ba (33Ba) is a filler formed by making an outer peripheral shape thereof coincide with the wooden board 12B and the front surface board 41 (the wooden board 13B and the back surface board 51), and an inner peripheral shape coincide with the fiber reinforced plastic board 23B (33B).

In a case in which the fiber reinforced plastic board 23C (33C) having both end portions in quadrangular shapes shown in Fig. 15 is used as the fiber reinforced plastic board 23 (33), a filler 23Ca (33Ca) shown in Fig. 17 is used. The filler 23Ca (33Ca) is a filler formed by making an outer peripheral shape thereof coincide with the wooden board 12B and the front surface board 41 (the wooden board 13B and the back surface board 51), and an inner peripheral shape coincide with the fiber reinforced plastic board 23C (33C).

The front surface portion 40 is formed of a thin board-shaped front surface board 41. The front surface board 41 prevents the fiber reinforced plastic boards 22 and 23 from being exposed on the front surface side of the reinforcing fibers. As the front surface board 41, for example, in addition to a wooden board similar to the thin board-shaped wooden boards constituting the core material portion 10B, a sheet made of a thermoplastic resin such as ABS, PE, PBT, polyester, nylon, etc., and a sheet made of a thermosetting resin such as phenol, melamine, polyester, etc., can be adopted.

Further, since the front surface portion 40 is a portion in which there are few elements that are significantly worn as compared with the back surface portion 50, a resin-impregnated sheet in which paper or non-woven fabric is impregnated with resin, a coating material made of acrylic or urethane resin, or a member in which a surface of wood and the like painted thereon is coated with a resin can be adopted as the front surface board 41. In the case in which a resin sheet is used as the front surface board 41, a thickness of the sheet is preferably 0.1 mm or more and 1 mm or less, and for other materials, 0.05 mm or more and 3 mm or less are preferable.

The back surface portion 50 is formed of a thin board-shaped back surface board 51. The back surface board 51 prevents the reinforcing fibers of the fiber reinforced plastic boards 32 and 33 from being exposed on the back surface side. Due to friction with a floor resulting from a braking operation or friction resulting from acrobatic movements in the case of sliding on handrails of stairs or the like, when a material having excellent wear resistance is not disposed for the back surface portion 50, the fiber reinforced plastic boards 32 and 33 of the back surface reinforcing portion 30 are easily exposed, which may injure human bodies. Therefore, as the back surface board 51, in addition to the same wooden board as the thin board-shaped wooden boards constituting the core material portion 10B, a sheet made of a thermoplastic resin such as ABS, PE, PBT, polyester, nylon, etc., and a sheet made of a thermosetting resin such as phenol, melamine, polyester, etc., can be adopted. In addition, a resin-impregnated sheet in which paper or non-woven fabric is impregnated with resin, a coating material made of acrylic or urethane resin, or a member in which a surface of wood and the like painted thereon is coated with a resin can be adopted as the back surface board 51. As a particularly preferable back surface board 51, an ultra-high molecular weight polyethylene resin sheet is preferable as a resin sheet having extremely excellent wear resistance.

A normal high-density polyethylene (PE) resin has a molecular weight of 100,000 or less, whereas an ultra-high molecular weight polyethylene resin has a molecular weight of 500,000 or more. In the present embodiment, the back surface board 51 is formed of an ultra-high molecular weight polyethylene resin sheet having a molecular weight of 500,000 or more, and preferably formed of an ultra-high molecular weight polyethylene resin sheet having a molecular weight of 1,000,000 or more.

The ultra-high molecular weight polyethylene resin is a resin having extremely high viscosity and low fluidity, unlike ordinary thermoplastic resins. For that reason, in addition to original slip characteristics of the resin, wear resistance thereof is very high, and thus normal extrusion molding is not applicable thereto, and the resin should be sintered and molded at high temperature and high pressure. The ultra-high molecular weight polyethylene resin sheet is lightweight with a specific gravity of 1 or less and can be adopted to have a thickness of 0.1 mm or more and 5 mm or less. In particular, considering abrasion resistance on the lower surface side and the light weight characteristic, it is preferable to use a sheet having a thickness of 0.2 mm or more and 2 mm or less. Further, since the ultra-high molecular weight polyethylene resin sheet is a translucent resin, it may be arbitrarily colored and used, and when a design in which screen printing or sublimation printing has been performed from the back side is adopted, it is possible to prevent the design printed on an inner side (adhered surface side) thereof from disappearing even if the front side (outer side) wears.

Fig. 18 is a plan view of the wooden board 11B shown in Fig. 13. As shown in Fig. 18, the length L2 of the wooden board 11B in the width direction Wd at the central portion of the deck 100B in the longitudinal direction Ld is shorter than the length L3 in the width direction Wd at both end portions of the deck 100B in the longitudinal direction Ld. The length L2 is preferably set to be in a range of at least 20% and at most 70% of the length L3. More preferably, the length L2 is in a range of at least 30% and at most 60% of the length L3.

A central portion 11Bb of the wooden board 11B A has a shape in which a length thereof in the width direction Wd gradually increases linearly from a region having the same width at a center position of the central portion 11Bb in the longitudinal direction Ld toward an end portion 11Bc thereof. Further, the central portion 11Bb has a shape in which the length in the width direction Wd gradually increases linearly from the region having the same width at the center position of the central portion 11Bb in the longitudinal direction Ld toward an end portion 11Bd thereof. The central portion 11Bb is a portion in which the length L2 of the wooden board 11B in the width direction Wd is shorter than the lengths L3 of the end portion 11Bc and the end portion 11Bd in the width direction Wd.

The length Lx4 of the central portion 11Bb in the longitudinal direction Ld is preferably set to be, for example, in a range of at least 20% and at most 70% of the length L1 of the deck 100 in the longitudinal direction Ld. More preferably, the length Lx4 is in a range of at least 30% and at most 60% of the length L1. The length L2 in the width direction Wd and the length Lx4 in the longitudinal direction Ld can be set to arbitrary values within the above-mentioned range. In a case in which the length L2 of the wooden board 11B is 20% of the length L3 and the length Lx4 is 70% of the length L1, the torsional rigidity of the central portion 11Bb of the wooden board 11B is the lowest. In a case in which the length L2 of the wooden board 11B is 70% of the length L3 and the length Lx4 is 20% of the length L1, the torsional rigidity of the central portion 11Bb of the wooden board 11B is the highest.

As shown in Fig. 18, a filler 11Ba is disposed at the central portion of the wooden board 11B in the longitudinal direction Ld to sandwich a portion having the length L2 in the width direction Wd. As the filler 11Ba, the same material as those of the fillers 12Aa and 16Aa of the second embodiment can be adopted.

Fig. 19 is a cross-sectional view along line III-III showing a state in which the deck 100B for the skateboard 300 in Fig. 13 has been bonded. As shown in Fig. 19, the filler 23a fills a region sandwiched between the front surface portion 40 and the core material portion 10B and is filled from the outer edge of the fiber reinforced plastic board 23 to a position (L7) that coincides with the outer edge of the front surface board 41. The filler 22a fills a region that is located outside the central portion of the fiber reinforced plastic board 22 and sandwiched between the front surface portion 40 and the core material portion 10B and is filled from the outer edge (L5 end portion) of the fiber reinforced plastic board 22 to a position that coincides with the outer edge of the wooden board 12B.

The filler 33a fills a region sandwiched between the back surface portion 50 and the core material portion 10B and is filled from the outer edge of the fiber reinforced plastic board 33 to a position (L7) that coincides with the outer edge of the back surface board 51. The filler 32a fills a region that is located outside the central portion of the fiber reinforced plastic board 32 and sandwiched between the back surface portion 50 and the core material portion 10B and is filled from the outer edge (L5 end portion) of the fiber reinforced plastic board 32 to a position that coincides with the outer edge of the wooden board 13B. The filler 11Ba fills a region sandwiched between the wooden board 12B and the wooden board 13B and is filled from the outer edge (L2 end portion) of the central portion of the wooden board 11B to a position that coincides with the outer edges of the wooden boards 12B and 13B.

Although an example in which the lengths L5 of the fiber reinforced plastic boards 22 and 32 in the width direction Wd at the central portion of the deck 100B in the longitudinal direction Ld are shorter than the length L3 in the width direction Wd at both end portions of the deck 100B in the longitudinal direction Ld has been described in the present embodiment, other aspects may be used. For example, similarly for each of the fiber reinforced plastic boards 23 and 33 in which the central portion is not formed in a narrowed shape, the length in the width direction Wd at the central portion of the deck 100B in the longitudinal direction Ld may be formed to be shorter than the length L3 in the width direction Wd at both end portions of the deck 100B in the longitudinal direction Ld to be formed in a narrowed shape.

Also, although an example in which the length L2 of the wooden board 11B is larger than the lengths L5 of the fiber reinforced plastic boards 22 and 32 in the width direction Wd has been described in the present embodiment, the length L5 and the length L2 may be the same length. In addition, the length L5 can be made larger than the length L2. Further, the length L5 does not need to be located at the center of the deck 100B in the width direction Wd and may be disposed to be biased from the center. Preferably, it is desirable to adopt a design adjusted to the required torsional rigidity by including such a laminated configuration.

Although an example in which the length L2 of the wooden board 11B in the width direction Wd at the central portion of the deck 100B in the longitudinal direction Ld is shorter than the length L3 in the width direction Wd at both end portions of the deck 100B in the longitudinal direction Ld has been described in the present embodiment, other aspects may be used. For example, for each of the wooden boards 12B and 13B in which the central portion is not formed in a narrowed shape, the length in the width direction Wd at the central portion of the deck 100B in the longitudinal direction Ld may be formed to be shorter than the length L3 in the width direction Wd at both end portions of the deck 100B in the longitudinal direction Ld to be formed in a narrowed shape.

In the present embodiment, the outer edges of the fiber reinforced plastic boards 22 and 23 are located inward by at least the length L7 from the outer edge of the wooden board 12B and the outer edge of the front surface board 41 on the entire circumferences of the fiber reinforced plastic boards 22 and 23. Similarly, in the present embodiment, the outer edges of the fiber reinforced plastic boards 32 and 33 are located inward by at least the length L7 from the outer edge of the wooden board 13B and the outer edge of the back surface board 51 on the entire circumferences of the fiber reinforced plastic boards 32 and 33.

As shown in Fig. 19, the outer edge of the front surface board 41 of the front surface portion 40 is bonded to the outer edge of the wooden board 12B of the core material portion 10B to be flush with each other. A portion located inward from a position deviated by the length L7 from an outer edge of the filler 23a is bonded to the outer edge of the fiber reinforced plastic board 23. The outer edge of the back surface board 51 of the back surface portion 50 is bonded to the outer edge of the wooden board 13B of the core material portion 10B to be flush with each other. A portion located inward from a position deviated by the length L7 from an outer edge of the filler 33a is bonded to the outer edge of the fiber reinforced plastic board 33.

In the present embodiment, the core material portion 10B, the front surface reinforcing portion 20, the back surface reinforcing portion 30, the front surface portion 40, and the back surface portion 50 are bonded and integrated together with an adhesive. The method of integrating is, for example, a method of obtaining the deck 100B having a desired outer shape by forming each portion to have almost the same size including an extra scale corresponding to a final product, applying an adhesive to each laminated bonding surface, pressurizing them through a molding mold, laminating and integrally bonding them, and cutting off an extra scale portion of an outer shape thereof. Here, since the shape of the deck 100B is a three-dimensional shape in detail, a pressure between layers of each portion is not necessarily uniform during pressurization. For that reason, a variation in an amount of the contained adhesive occurs depending on its location, which may cause a situation in which bonding layers are peeled off from each other.

Therefore, in the present embodiment, at least one of gaps between the core material portion 10B and the front surface reinforcing portion 20, between the core material portion 10B and the back surface reinforcing portion 30, between the front surface reinforcing portion 20 and the front surface portion 40, and between the back surface reinforcing portion 30 and the back surface portion 50 may be bonded with an adhesive with a non-woven fabric interposed therebetween. Further, at least one of gaps between the board materials constituting the core material portion 10B, between the board materials constituting the front surface reinforcing portion 20, and between the board materials constituting the back surface reinforcing portion 30 may be bonded with an adhesive with a non-woven fabric interposed therebetween. That is, at least a pair of board materials that are included in a plurality of board materials constituting the deck 100B and disposed adjacent to each other may be bonded with an adhesive with a non-woven fabric interposed therebetween.

For the non-woven fabric, a non-woven fabric made of synthetic fibers such as nylon, polyester, and vinylon can be preferably used. For example, a non-woven fabric having a thickness of 0.05 mm or more and 0.5 mm or less can be used. The non-woven fabric may be disposed between all layers or may be disposed only between layers necessary for molding. Further, it may be disposed on the entire surface between layers or may be disposed only in a necessary portion.

Although an example in which the filler 22a (32a) is disposed around the fiber reinforced plastic board 22 (32) in an outer frame shape to surround the entire circumference thereof has been described in the present embodiment, other aspects may be used. For example, a non-woven fabric having the same shape as the wooden board 12B (13B) may be interposed between the wooden board 12B (13B) and the fiber reinforced plastic board 22 (32) to bond them with an adhesive. In this case, instead of the filler 22a (32a), a non-woven fabric impregnated with an adhesive is disposed to surround the entire circumference thereof, by which the same effect as in the case in which the filler 22a (32a) is disposed is achieved.

Although the filler 11Ba is disposed at the central portion of the wooden board 11B in the longitudinal direction Ld to sandwich the narrowed portion in which the length in the width direction Wd is shortened in the present embodiment, other aspects may be used. For example, a non-woven fabric having the same shape as the wooden board 12B may be interposed between the wooden board 12B and the wooden board 11B and/or between the wooden board 11B and the wooden board 13B to bond them with an adhesive. In this case, instead of the filler 11Ba, a non-woven fabric impregnated with an adhesive is disposed, by which the same effect as in the case in which the filler 11Ba is disposed is achieved.

### Operations and effects of the deck 100B for the skateboard 300 of the present embodiment described above will be described.

According to the deck 100B for the skateboard 300 of the present embodiment, the core material portion 10B is disposed at the central portion in the thickness direction Td, and the front surface reinforcing portion 20 and the back surface reinforcing portion 30 are adhered respectively to the upper surface and the lower surface of the core material portion 10B in the thickness direction Td. Since the core material portion 10B is formed of the wooden boards 11B, 12B, and 13B having thin board shapes, weight reduction is realized as compared with the case in which the core material portion 10B is formed of fiber reinforced plastic boards. Also, since the front surface reinforcing portion 20 and the back surface reinforcing portion 30 are formed of the fiber reinforced plastic boards to reinforce the core material portion 10B, the load bearing capacity of the deck 100B can be increased. Further, since the front surface portion 40 is adhered to the upper surface of the front surface reinforcing portion 20 in the thickness direction, and the back surface portion 50 is adhered to the lower surface of the back surface reinforcing portion 30 in the thickness direction, it is possible to prevent the fiber reinforced plastic boards 22, 23, 32, and 33 from being exposed from the front surface or the back surface.

Also, according to the deck 100B for the skateboard 300 of the present embodiment, the outer edges of the fiber reinforced plastic boards 22 and 23 and the outer edges of the fiber reinforced plastic boards 32 and 33 are positioned inward from the outer edges of the wooden boards 12B and 13B and the outer edge of the front surface board 41 or the back surface board 51 on the entire circumference of each fiber reinforced plastic board. For that reason, even when the outer edge of the deck 100B is worn, the reinforcing fibers are not exposed from the outer edges of the fiber reinforced plastic boards, and the risk due to exposing of the reinforcing fibers can be eliminated. Further, since the outer edges of the fiber reinforced plastic boards 22, 23, 32, and 33 are positioned inward from the outer edges of the wooden boards 12B and 13B and the outer edge of the front surface board 41 or the back surface board 51 on the entire circumference of each fiber reinforced plastic board, it is also possible to omit the filler disposed in the outer frame shape to surround the entire circumference thereof.

### [Fourth embodiment]

Hereinafter, a skateboard deck 100C according to a fourth embodiment of the present invention will be described with reference to the figures. The present embodiment is a modified example of the first embodiment and is equivalent to the first embodiment except for the cases described below, and thus the description thereof will be omitted below.

In the first embodiment, the deck 100 is configured of only the core material portion 10 including the wooden boards 11 to 17. In contrast thereto, in the present embodiment, the deck 100C is configured of a core material portion 10C made of wooden boards, a front surface reinforcing portion 20C, a back surface reinforcing portion 30C, a front surface portion 40C, and a back surface portion 50C.

As shown in Fig. 20, the deck 100C of the present embodiment includes the core material portion 10C disposed substantially at a center thereof in the thickness direction Td, the front surface reinforcing portion 20C adhered to an upper surface of the core material portion 10C in the thickness direction Td, the back surface reinforcing portion 30C adhered to a lower surface of the core material portion 10C in the thickness direction Td, the front surface portion 40C adhered to an upper surface of the front surface reinforcing portion 20C in the thickness direction Td, and the back surface portion 50C adhered to a lower surface of the back surface reinforcing portion 30C in the thickness direction Td.

As shown in Fig. 20, the core material portion 10C has a thin board-shaped wooden board 11C and a thin board-shaped wooden board 12C bonded to an upper surface of the wooden board 11C in the thickness direction Td with an adhesive. A board thickness of each of the wooden boards 11C and 12C in the thickness direction Td is preferably set to be in a range of 0.5 mm or more and 6 mm or less, and for example, the board thickness in the thickness direction Td is 1.4 mm. For the wooden boards 11C and 12C, rotary wood such as maple, poplar, paulownia, and Pterocarya rhoifolia can be used.

The front surface reinforcing portion 20C is configured of a thin board-shaped fiber reinforced plastic board 22C bonded to an upper surface of the wooden board 12C, a thin board-shaped fiber reinforced plastic board 25C bonded to an upper surface of the fiber reinforced plastic board 22C with an adhesive, and a thin board-shaped fiber reinforced plastic board 24C bonded to an upper surface of the fiber reinforced plastic board 25C with an adhesive. A shape of the fiber reinforced plastic board 22C is substantially equivalent to the shape of the wooden board 15 shown in Fig. 6.

The back surface reinforcing portion 30C is configured of a thin board-shaped fiber reinforced plastic board 32C bonded to a lower surface of the wooden board 11C, a thin board-shaped fiber reinforced plastic board 35C bonded to a lower surface of the fiber reinforced plastic board 32C with an adhesive, and a thin board-shaped fiber reinforced plastic board 34C bonded to a lower surface of the fiber reinforced plastic board 35C with an adhesive. A shape of the fiber reinforced plastic board 32C is substantially equivalent to the shape of the wooden board 15 shown in Fig. 6.

In Fig. 20, lines shown on surfaces of the fiber reinforced plastic boards 22C, 25C, 24C, 32C, 35C, and 34C indicate fiber directions of reinforcing fibers. As the reinforcing fibers used for the fiber reinforced plastic boards 22C, 25C, 24C, 32C, 35C, and 34C, the same ones as those in the third embodiment can be adopted. Further, as a matrix resin impregnated with the reinforcing fibers, the same one as in the third embodiment can be adopted.

Fig. 22 is a plan view of the fiber reinforced plastic board 22C(32C) shown in Fig. 20. As shown in Fig. 22, a length L2 of the fiber reinforced plastic board 22C (32C) in the width direction Wd at a central portion of the deck 100C in the longitudinal direction Ld is shorter than the length L3 in the width direction Wd at both end portions of the deck 100C in the longitudinal direction Ld. The length L2 is preferably set to be in a range of at least 20% and at most 70% of the length L3. More preferably, the length L2 is in a range of at least 30% and at most 60% of the length L3.

A central portion 22Cb (32Cb) of the fiber reinforced plastic board 22C (32C) has a shape in which a length thereof in the width direction Wd gradually increases in an arc shape from a region having the same width at a center position of the central portion 22Cb (32Cb) in the longitudinal direction Ld toward an end portion 22Cc (32Cc) thereof. Further, the central portion 22Cb (32Cb) has a shape in which the length in the width direction Wd gradually increases in an arc shape from the region having the same width at the center position of the central portion 22Cb (32Cb) in the longitudinal direction Ld toward an end portion 22Cd (32Cd) thereof. The central portion 22Cb (32Cb) is a portion in which the length L2 of the fiber reinforced plastic board 22C (32C) in the width direction Wd is shorter than the lengths L3 of the end portion 22Cc (32Cc) and the end portion 22Cd (32Cd) in the width direction Wd.

A length Lx5 of the central portion 22Cb (32Cb) in the longitudinal direction Ld is preferably set to be, for example, in a range of at least 20% and at most 70% of the length L8 of the deck 100 in the longitudinal direction Ld. More preferably, the length Lx5 is in a range of at least 30% and at most 60% of the length L8. The length L2 and the length Lx5 can be set to arbitrary values within the above-mentioned range. In a case in which the length L2 of the fiber reinforced plastic board 22C (32C) in the width direction Wd is 20% of the length L3 and the length Lx5 in the longitudinal direction Ld is 70% of the length L8, the torsional rigidity of the central portion 22Cb (32Cb) of the fiber reinforced plastic board 22C (32C) is the lowest. In a case in which the length L2 of the fiber reinforced plastic board 22C (32C) is 70% of the length L3 and the length Lx5 is 20% of the length L8, the torsional rigidity of the central portion 22Cb (32Cb) of the fiber reinforced plastic board 22C (32C) is the highest.

As shown in Figs. 20 and 22, a filler 22Ca is disposed at the central portion of the fiber reinforced plastic board 22C in the longitudinal direction Ld to sandwich a portion having the length L2 in the width direction Wd. A filler 32Ca is disposed at the central portion of the fiber reinforced plastic board 32C in the longitudinal direction Ld to sandwich a portion having the length L2 in the width direction Wd. As the fillers 22Ca and 32Ca, the same materials as those of the fillers 12Aa and 16Aa of the second embodiment can be adopted.

The front surface portion 40C is formed of a thin board-shaped wooden board 41C. The wooden board 41C prevents reinforcing fibers of the fiber reinforced plastic boards 22C, 25C, and 24C from being exposed.

The back surface portion 50C is formed of a thin board-shaped wooden board 51C. The wooden board 51C prevents reinforcing fibers of the fiber reinforced plastic boards 32C, 35C, and 34C from being exposed.

As the wooden boards 41C and 51C, the same wooden boards as the wooden boards 11 to 17 of the first embodiment can be adopted.

Fig. 21 is a cross-sectional view along line IV-IV showing a state in which the deck 100C forthe skateboard 300 of Fig. 20 has been bonded. As shown in Fig. 21, the filler 22Ca fills a region sandwiched between the wooden board 12C and the fiber reinforced plastic board 25C, and is filled from an outer edge of the fiber reinforced plastic board 22C to a position that coincides with an outer edge of the wooden board 12C. The filler 32Ca fills a region sandwiched between the wooden board 11C and the fiber reinforced plastic board 35C and is filled from an outer edge of the fiber reinforced plastic board 32C to a position that coincides with an outer edge of the wooden board 11C.

Although the filler 22Ca is disposed on both outer sides of the central portion of the fiber reinforced plastic board 22C in the longitudinal direction Ld, and the filler 32Ca is disposed on both outer sides of the central portion of the fiber reinforced plastic board 32C in the longitudinal direction Ld in the present embodiment, other aspects may be used. For example, the filler 22Ca and the filler 32Ca may not be disposed. Further, for example, instead of the filler 22Ca and the filler 32Ca, a non-woven fabric impregnated with an adhesive may be disposed.

### [Fifth embodiment]

Hereinafter, a skateboard deck 100D according to a fifth embodiment of the present invention will be described with reference to the figures. The present embodiment is a modified example of the fourth embodiment and is equivalent to the fourth embodiment except for the cases described below, and thus the description thereof will be omitted below.

As shown in Fig. 23, the deck 100D of the present embodiment includes a core material portion 10D disposed approximately at a center thereof in the thickness direction Td, a front surface reinforcing portion 20D adhered to an upper surface of the core material portion 10D in the thickness direction Td, a back surface reinforcing portion 30D adhered to a lower surface of the core material portion 10D in the thickness direction Td, a front surface portion 40D adhered to an upper surface of the front surface reinforcing portion 20D in the thickness direction Td, and a back surface portion 50D adhered to a lower surface of the back surface reinforcing portion 30D in the thickness direction Td. In this respect, the deck 100D of the present embodiment is equivalent to the deck 100C of the fourth embodiment.

As shown in Fig. 23, the core material portion 10D has a thin board-shaped wooden board 11D, a thin board-shaped wooden board 12D bonded to an upper surface of the wooden board 11D in the thickness direction Td with an adhesive, and a thin board-shaped wooden board 13D bonded to the lower surface of the wooden board 11D in the thickness direction Td with an adhesive. The wooden boards 11D, 12D, and 13D are made of maple wood which have uniform-width shapes and have grain directions in the longitudinal direction Ld of the deck 100D. A thickness of the wooden board 11D is 1.8 mm and a thickness of each of the wooden boards 12D and 13D is 1.4 mm. The thickness of the wooden board 11D is different from the thickness of each of the wooden boards 12D and 13D simply because the board thickness of the wooden board 11D is increased to increase the rigidity in the longitudinal direction.

As shown in Fig. 23, the deck 100D includes at least the core material portion 10D made of wooden boards 11D, 12D, and 13D (second board material) disposed substantially at the center thereof in the thickness direction, the front surface reinforcing portion 20D formed by a fiber reinforced plastic board 22D (first board material) and a fiber reinforced plastic board 24D (second board material) having thin board shapes adhered to an upper surface of the core material portion 10D, and the back surface reinforcing portion 30D formed by a fiber reinforced plastic board 32D (first board material) and a fiber reinforced plastic board 34D (second board material) having thin board shapes adhered to a lower surface of the core material portion 10D.

The fiber reinforced plastic boards 22D and 24D constituting the front surface reinforcing portion 20D are equivalent to the fiber reinforced plastic boards 22C and 24C of the fourth embodiment. Further, the fiber reinforced plastic boards 32D and 34D constituting the back surface reinforcing portion 30D are equivalent to the fiber reinforced plastic boards 32C and 34C of the fourth embodiment.

Fig. 24 is a cross-sectional view along line V-V showing a state in which the deck 100D for the skateboard 300 in Fig. 23 has been bonded. As shown in Fig. 24, a filler 22Da fills a region sandwiched between the wooden board 12D and the fiber reinforced plastic board 24D and is filled from an outer edge of the fiber reinforced plastic board 22D to a position that coincides with an outer edge of the wooden board 12D. A filler 32Da fills a region sandwiched between the wooden board 13D and the fiber reinforced plastic board 34D and is filled from an outer edge of the fiber reinforced plastic board 32D to a position that coincides with an outer edge of the wooden board 13D. The filler 22Da provided on both outer sides of the central portion of the fiber reinforced plastic board 22D in the longitudinal direction Ld is equivalent to the filler 22Ca in the fourth embodiment. Similarly, the filler 32Da provided on both outer sides of the central portion of the fiber reinforced plastic board 32D in the longitudinal direction Ld is equivalent to the filler 32Ca of the fourth embodiment.

In the fiber reinforced plastic boards 22D, 24D, 32D, and 34D of the deck 100D, glass fibers are used as reinforcing fibers. As shown in Fig. 23, fiber directions of the fiber reinforced plastic boards 22D and 32D are aligned in one direction of the width direction Wd. Fiber directions of the fiber reinforced plastic boards 24D and 34D are aligned in one direction of the longitudinal direction Ld.

A volume content of the glass fibers in the fiber reinforced plastic boards 22D, 24D, 32D, and 34D is approximately 50%. A matrix resin is formed by impregnating with a heat-curable type epoxy resin having excellent adhesiveness. The glass fibers aligned in one direction are resin cured boards that are impregnated with a liquid epoxy resin and then heat-cured in a state in which tension is applied in the fiber direction. For that reason, a specific strength of the glass fiber reinforced plastic board is high, and lightweight and efficient strength characteristics can be obtained. As a result, the required strength characteristics can be easily obtained simply by regulating the board thickness. A thickness of each of the fiber reinforced plastic boards 22D, 24D, 32D, and 34D of the present embodiment is regulated to 0.3 mm.

Further, the deck 100D includes the front surface portion 40D adhered to the upper surface of the front surface reinforcing portion 20D and the back surface portion 50D adhered to the lower surface of the back surface reinforcing portion 30D. The front surface portion 40D is formed of a wooden board 41D made of maple material having a thickness of 1.0 mm and having a grain direction in the longitudinal direction Ld. Also, the back surface portion 50D is formed of a back surface board 51D made of an ultra-high molecular weight polyethylene resin sheet having a board thickness of 0.5 mm, particularly in consideration of wear resistance on a lower surface side thereof. Details of the back surface board 51D are equivalent to those of the back surface board 51 described above with respect to the third embodiment.

Further, since the back surface reinforcing portion 30D of the deck 100D is a fiber reinforced plastic made of transparent glass fibers and a transparent epoxy resin, both the fiber reinforced plastic boards 32D and 34D have transparency. Also, since the back surface board 51D of the deck 100D uses a resin sheet made of an ultra-high molecular weight polyethylene resin, this is also transparent. For that reason, in the deck 100D of the present embodiment, the substantially crescent-shaped filler 32Da can be seen through the back surface board 51D and the fiber reinforced plastic boards 32D and 34D on the lower surface side thereof. Therefore, the user can easily recognize whether or not the deck has a reduced torsional rigidity.

Here, the torsional rigidity and the bending rigidity of the deck 100D of the present embodiment and a deck of a comparative example (not shown) were measured and compared. In the deck of the comparative example, the fiber reinforced plastic boards 22D and 32D in Fig. 23 are changed to fiber reinforced plastic boards having the same width in which the lengths in the width direction Wd at the central portion in the longitudinal direction Ld are equal to the lengths L3 at both end portions. Types and configurations of other board materials are equivalent to those of the deck 100D. Regarding external dimensions of both the deck 100D and the deck of the comparative example, the thickness T1 is 7.4 mm, the width W1 is 203 mm, and the length L1 is 802 mm.

Here, amounts of displacement with respect to the torsional rigidity and the bending rigidity were measured by the same test method as the test method (see Figs. 10A and 10B) performed in the first embodiment.

Measurement results of the amounts of displacement and the weight are as follows.
Torsional rigidity (WT1 = 1 kg)
Amount of displacement of deck 100D: 18.05 mm
Amount of displacement of comparative deck: 15.60 mm
Bending rigidity (WT2 = 2 kg)
Amount of displacement of deck 100D: 10.25 mm
Amount of displacement of comparative deck: 9.75 mm
Weight of deck
Weight of deck 100D: 1069 g
Weight of comparative deck: 1140 g

Each rigidity increases as the amount of displacement measured by the above test method decreases. Therefore, it can be confirmed that, as compared to the deck of the comparative example, the deck 100D of the present embodiment has a clearly reduced torsional rigidity and is lightweight, although the bending rigidity in the longitudinal direction Ld is substantially the same.

Further, the deck 100D, which includes the lightweight core material portion 10D made of the wooden boards 11D to 13D disposed at approximately the center thereof in the thickness direction Td, and the reinforcing portions 20D and 30D made of the fiber reinforced plastic boards 22D, 24D, 32D and 34D that are adhered to the upper surface and the lower surface of the core material portion 10D and have a high specific strength and an efficient reinforcing effect, is a skateboard deck having a thinner thickness T1, lighter weight, and excellent operability as compared with the deck 100 of the first embodiment.

The embodiments of the present invention have been described above. However, the present invention is not limited to the above embodiments, and various modifications can be made without departing from the scope of the claims. The configurations of the above embodiments may be partially omitted or may be arbitrarily combined together to be different from the above.

Although all the board materials constituting the core material portion 10 are made of wood in the first embodiment, other aspects may be used. For example, at least one of the wooden boards 11 to 17 may be formed of wood, and the other may be formed of a fiber reinforced plastic. Forming at least one to be made of wood is to reduce the weight of the deck. In a case in which the wooden boards 15 and 16 are made of a fiber reinforced plastic, for example, the fiber reinforced plastic boards 22 and 32 shown in Fig. 13 can be adopted. Also, in a case in which a fiber reinforced plastic is used for the wooden boards 11 to 14 and 17, for example, the fiber reinforced plastic boards 23 and 33 shown in Fig. 13 can be adopted.

In the second embodiment, the board materials constituting the core material portion 10A are entirely made of wood, but other aspects may be used. For example, at least one of the wooden boards 11A to 17A may be formed of wood, and the other may be formed of a fiber reinforced plastic. Forming at least one to be made of wood is to reduce the weight of the deck. In a case in which the wooden boards 12A and 16A are made of a fiber reinforced plastic, for example, the fiber reinforced plastic boards 22 and 32 shown in Fig. 13 can be adopted. Also, in a case in which a fiber reinforced plastic is used for the wooden boards 11A, 13A to 15A, and 17A, for example, the fiber reinforced plastic boards 23 and 33 shown in Fig. 13 can be adopted. For example, instead of the wooden board 14A, the fiber reinforced plastic board 23 shown in Fig. 13 may be adopted, and all other board materials may be formed of wood.

In the third embodiment, a thermoplastic resin sheet, a thermosetting resin sheet, or the like can be used for the front surface board 41 of the front surface portion 40, and an ultra-high molecular weight polyethylene resin sheet or the like can be used forthe back surface board 51 of the backsurface portion 50, but other aspects may be used. For example, thin board-shaped wood may be used for the front surface portion 40 and the back surface portion 50. In the case of adopting the thin board-shaped wood, for example, the wooden board 11 shown in Fig. 4 can be adopted instead of the front surface board 41 and the back surface board 51.

In the first embodiment, the wooden board 11 (second board material) in which the length in the width direction Wd at the central portion is the length L3 is disposed in the uppermost layer of the core material portion 10, and the wooden board 17 (second board material) in which the length in the width direction Wd at the central portion is the length L3 is disposed in the lowermost layer of the core material portion 10, but other aspects may be used. For example, the wooden board 15 (first board material) in which the length in the width direction Wd at the central portion is the length L2 or the wooden board 16 (first board material) in which the length in the width direction Wd at the central portion is the length L4 may be disposed in the uppermost layer or the lowest layer of the core material portion 10.

In the second embodiment, the wooden board 11A (second board material) in which the length in the width direction Wd at the central portion is the length L3 is disposed in the uppermost layer of the core material portion 10A, and the wooden board 17A (second board material) in which the length in the width direction Wd at the central portion is the length L3 is disposed in the lowermost layer of the core material portion 10A, but other aspects may be used. For example, the wooden board 12A (first board material) or the wooden board 16A (first board material) may be disposed in the uppermost layer or the lowest layer of the core material portion 10A.

In the first embodiment, the wooden board 11 is disposed in the uppermost layer of the core material portion 10 and the wooden board 17 is disposed in the lowermost layer of the core material portion 10, but the arrangement aspect of the board materials included in the core material portion 10 may be another aspects. For example, instead of the wooden board 11, a thermoplastic resin sheet or a thermosetting resin sheet similar to the front surface board 41 of the front surface portion 40 shown in Fig. 13 may be disposed in the uppermost layer of the core material portion 10. Further, instead of the wooden board 17, an ultra-high molecular weight polyethylene resin sheet or the like similar to the back surface board 51 of the back surface portion 50 shown in Fig. 13 may be disposed in the lowermost layer of the core material portion 10.

In the present embodiment, in Figs. 9, 12, 19, 21, and 24, which are cross-sectional views of the central portion of the deck in the longitudinal direction Ld, the end portions in the width direction Wd all have angular shapes, but they may be rounded into appropriate arc shapes.

### [Reference Signs List]

10, 10A, 10B, 10C, 10D Core material portion
10a to 10d, 11, 11A, 11B, 11C, 11D, 12, 12A, 12B, 12C, 12D, 13, 13A, 13B, 13D, 14, 14A, 15, 15A, 16,
16A, 17, 17A, 41C, 41D, 51C Wooden board
11Ba, 12Aa, 16Aa, 22a, 22Ca, 22Da, 32Ca, 32Da, 23a, 23Aa, 23Ba, 23Ca, 32a, 33a, 33Aa, 33Ba, 33Ca Filler
11Bb, 15a, 16a, 17a, 22b, 22Cb, 32b, 32Cb Central portion
11Bc, 11Bd, 15b, 15c, 16b, 16c, 17b, 17c, 22c, 22d, 22Cc, 22Cd, 32c, 32d, 32Cc, 32Cd End portion 20, 20C, 20D Front surface reinforcing portion
22, 22C, 22D, 23, 23A, 23B, 23C, 24C, 24D, 25C, 32, 32C, 32D, 33, 33A, 33B, 33C, 34C, 34D, 35C Fiber reinforced plastic board
30, 30C, 30D Back surface reinforcing portion
40, 40C, 40D Front surface portion
41 Front surface board
50, 50C, 50D Back surface portion
51, 51D Back surface board
100, 100A, 100B, 100C, 100D Deck
200 Wheel
300 Skateboard
Ld Longitudinal direction
Td Thickness direction
Wd Width direction

## Claims

1. A skateboard deck in which a plurality of board materials formed in thin board shapes are bonded together with an adhesive, wherein
the plurality of board materials include at least a first board material and a second board material, and also include a core material portion including the first board material and/or the second board material,
a length of the first board material in a width direction orthogonal to a longitudinal direction of the deck at a central portion thereof in the longitudinal direction is shorter than a length thereof in the width direction at both end portions of the deck in the longitudinal direction, and
a length of the second board material in the width direction at the central portion is substantially equivalent to a length thereof in the width direction at both end portions, and the length in the width direction at the central portion is longer than that of the first board material.

2. The skateboard deck according to claim 1, wherein
the length of the first board material in the width direction at the central portion is set to be in a range of at least 20% and at most 70% of the length of the second board material in the width direction at the central portion, and
a length of the portion in the longitudinal direction, in which the length of the first board material in the width direction is shorter than the length of the second board material in the width direction, is set to be at least 20% and at most 70% of the length of the first board material in the longitudinal direction.

3. The skateboard deck according to claim 1 or 2, wherein
the first board material and the second board material are at least formed of wood having at least a grain direction in the longitudinal direction or the width direction or a fiber reinforced plastic having at least a fiber direction in the longitudinal direction or the width direction.

4. The skateboard deck according to any one of claims 1 to 3, wherein
the plurality of board materials include at least:
the core material portion which is disposed substantially at a center in a thickness direction thereof and includes the first board material formed of wood and/or the second board material formed of wood; and
a reinforcing portion which is adhered to at least one of an upper surface of the core material portion and a lower surface of the core material portion and includes the first board material formed of a fiber reinforced plastic board having a thin board shape and/or the second board material formed of a fiber reinforced plastic board.

5. The skateboard deck according to any one of claims 1 to 4, wherein
a pair of the second board materials are disposed above and below the first board material,
a filler that is filled outside the central portion of the first board material and in a region sandwiched between the pair of second board materials is provided, and
the filler is filled to a position that substantially coincides with outer edges of the pair of second board materials.

6. The skateboard deck according to any one of claims 1 to 5, wherein
a pair of second board materials are disposed above and below the first board material,
the second board material disposed on the lower side of the first board material forms a back surface of the deck and is bonded to the lower surface of the first board material with an adhesive, and
the pair of second board materials are bonded with an adhesive in a region of the central portion of the deck in which the first board material is not disposed.

7. The skateboard deck according to any one of claims 1 to 6, wherein
an outer edge of a board material that is formed of a fiber reinforced plastic among the plurality of board materials is positioned inward at least from an outer edge of the second board material formed of wood on the entire circumference of the board material.

8. The skateboard deck according to any one of claims 1 to 7, wherein
a board material that is formed of a fiber reinforced plastic among the plurality of board materials includes a filler that is disposed in an outer frame shape to surround the entire circumference thereof and fills a space sandwiched by any of the board materials formed of wood, and
the filler is filled at least to a position that substantially coincides with an outer edge of the second board material made of wood.

9. The skateboard deck according to any one of claims 1 to 8, wherein
at least a pair of board materials included in the plurality of board materials and disposed adjacent to each other are bonded with an adhesive with a non-woven fabric interposed therebetween.

10. A skateboard comprising:
the skateboard deck according to any one of claims 1 to 9; and
wheels attached to a back surface of the deck.
